# EUROPEAN PATENT SPECIFICATION

(11) **EP 3 686 229 B1**
(45) Date of publication and mention of the grant of the patent: **21.08.2024**
(21) Application number: 20158717.7
(22) Date of filing: 13.10.2017
(51) Int. Cl.: C08G 18/08, C08G 18/00, C08G 18/28, C08G 18/78, C08G 18/80, C09D 175/04, C07C 265/14, C08G 18/77, C08G 18/79, C08G 18/72, C08G 18/38, C08G 18/62, C08K 5/00, C08K 5/01, C08K 5/101, C08K 5/205

(54) **ISOCYANATE COMPOSITION, AQUEOUS DISPERSION OF ISOCYANATE COMPOSITION, PRODUCTION METHOD THEREFOR, COATING COMPOSITION, AND COATING FILM**
ISOCYANATZUSAMMENSETZUNG, WÄSSRIGE DISPERSION VON ISOCYANAT, HERSTELLUNGSVERFAHREN DAFÜR, BESCHICHTUNGSZUSAMMENSETZUNG UND BESCHICHTUNGSFILM
COMPOSITION D'ISOCYANATE, DISPERSION AQUEUSE DE COMPOSITION D'ISOCYANATE, SON PROCÉDÉ DE PRODUCTION, COMPOSITION DE REVÊTEMENT ET FILM DE REVÊTEMENT

(30) Priority: 14.10.2016 JP 2016203091; 14.10.2016 JP 2016203096; 14.10.2016 JP 2016203142; 14.10.2016 JP 2016203143
(43) Date of publication of application: 29.07.2020
(62) Divisional of application: 17859511.2
(73) Proprietor: Asahi Kasei Kabushiki Kaisha, Tokyo 1000006 (JP)
(72) Inventor: Fukuchi, Takashi, Tokyo, 101-8101 (JP); Miwa, Yuichi, Tokyo, 101-8101 (JP)
(74) Representative: Strehl Schübel-Hopf & Partner

(56) References cited:
- EP-A1- 1 535 939
- EP-A2- 2 900 722
- WO-A1-2004/078819
- JP-A- 2000 044 649

## Description

### TECHNICAL FIELD

The present invention relates to an isocyanate composition, a coating composition, and a coating film.

### BACKGROUND OF THE INVENTION

A coating film obtained from a coating composition containing, as a curing agent, a polyisocyanate composition obtained from an aliphatic diisocyanate or an alicyclic diisocyanate is excellent in weather resistance, chemical resistance, abrasion resistance, or the like.

In recent years, the technical development for decreasing the viscosity of polyisocyanate to be used as a curing agent has been actively made accompanying with the growth of the environmental protection of the earth, because the decrease in the viscosity of polyisocyanate reduces the amount of an organic solvent used in a coating composition (Patent Document 1 or 2). However, there is a case where the decrease in the number of isocyanate groups deteriorates the drying properties in these technology.

In order to solve the above-mentioned problem, the technique for decreasing the viscosity while maintaining the functional number of isocyanate groups has been disclosed (Patent Document 3).

In addition, making a coating composition be aqueous has been desired from the viewpoint of the protection of global environment or the industrial safety and health.

For example, a method for introducing a nonionic hydrophilic group into a polyisocyanate (Patent Document 4, 5 or 6) makes it possible to disperse the polyisocyanate in water.

Patent Document 7 discloses a polyisocyanate composition providing the water dispersibility thereto by mixing an allophanate group-containing polyisocyanate with an isocyanurate group-containing polyisocyanate and an alkylene oxide adduct of a monool.

Patent Document 8 discloses a technique for improving the durability of a resultant coating film by realizing aqueous dispersion by decreasing the viscosity while maintaining the isocyanate group number without adding any hydrophilic groups has been disclosed.

### DOCUMENTS OF RELATED ART

### Patent Documents

Patent Document 1: Japanese Unexamined Patent Application Publication No. Hei 05-222007
Patent Document 2: Japanese Patent No. 3055197
Patent Document 3: Japanese Patent No. 5178200
Patent Document 4: Japanese Unexamined Patent Application Publication No. Hei 05-222150
Patent Document 5: Japanese Unexamined Patent Application Publication No. Hei 09-328654
Patent Document 6: Japanese Unexamined Patent Application Publication No. 2000-44649
Patent Document 7: Japanese Unexamined Patent Application Publication No.2003-073447
Patent Document 8: Japanese Unexamined Patent Application Publication No. Hei 11-286649

### SUMMARY OF THE INVENTION

### PROBLEMS TO BE SOLVED BY THE INVENTION

However, there is a probability that the water dispersibility of the polyisocyanate composition disclosed in Patent Document 4 or 5 or the water-resistance of a resultant coating film deteriorates due to the high viscosity thereof.

The polyisocyanate composition disclosed in Patent Document 6 has a problem in which the water-resistance of a resultant coating film deteriorates depending on the mole ratio of added nonionic hydrophilic groups.

The polyisocyanate composition disclosed in Patent Document 7 has a problem in which the drying property of a resultant coating film becomes insufficient.

The technique disclosed in Patent Document 8 has a problem in terms of the stability of the dispersibility in water.

The present invention has been made in view of the above-mentioned circumstances, and aims to provide an isocyanate composition which has a low viscosity and is excellent in the water dispersibility, drying property, water-resistance, wet-adhesion resistance, and external appearance of a resultant coating film.

WO 2004/078819 A1 discloses a water-dispersible polyisocyanate composition comprising lysine triisocyanate which is modified with a hydrophilic compound.

### MEANS TO SOLVE THE PROBLEMS

The present invention is set out in the appended claims.

### EFFECTS OF THE INVENTION

According to the present invention, an isocyanate composition having a low viscosity and an excellent water dispersibility, drying property, water-resistance, wet-adhesion resistance, and external appearance of a resultant coating film, a coating composition containing the same, and a coating formed by curing the coating composition are provided.

### EMBODIMENTS FOR CARRYING OUT THE INVENTION

Embodiments of the present invention will be described below. The following embodiments is examples to describe the present invention and the present invention is not intended to be limited to the following embodiments. The present invention may be modified in various ways within the scope of the claims.

In the present specification, the term "polyisocyanate" means a polymer in which a plurality of monomers having at least one isocyanate group (-NCO) is bound.

In the present specification, the term "polyol" means a compound having at least two hydroxy groups (-OH).

In the present specification, the term "(meth)acryl" encompasses methacryl and acryl, and the term "(meth)acrylate" encompasses methacrylate and acrylate, unless otherwise indicated.

### <Isocyanate composition>

The isocyanate composition of the present invention is described in the following with reference to isocyanate compounds of general formula (I) and (II) for better understanding. The present invention, however, relates to an isocanate composition comprising an isocyanate compound of general formula (I)-1, (I)-2 or (I)-3.

An isocyanate composition contains an isocyanate compound of general formula (I).

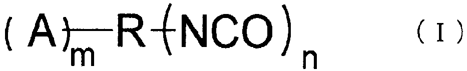

In the general formula (I), A represents a residual group containing a reactant structure of an active hydrogen-containing hydrophilic compound and an isocyanate group, and the sum (m+n) of the average number m and the average number n is 3. However, m is an integer of 1 or more. The term "average number" means an average value of the number of isocyanate groups present in a molecule.

R represents a group of general formula (II).

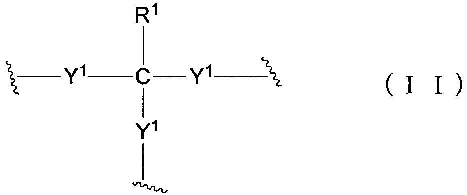

In the general formula (II), a plurality of Y¹s each independently represent a single bond or a divalent C1-20 hydrocarbon group which may have an ester structure and/or an ether structure. The plurality of Y¹s may be identical to or different from each other. R¹ represents a hydrogen atom or a monovalent C1-12 hydrocarbon group. A wavy line represents a bond.

At least one of the plurality of Y¹s preferably have an ester structure.

[A] In the general formula (I), A represents a residual group containing a reactant structure of an active hydrogen-containing hydrophilic compound and an isocyanate group, and may be represented by the following formula (A-1), (A-2) or (A-3), for example.

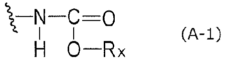

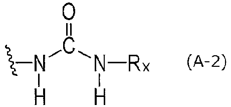

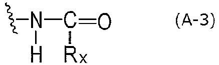

In the formulae, each Rx independently represents a residual group obtained by removing an active hydrogen-containing functional group from the active hydrogen-containing hydrophilic compound, or a group of the following general formula (iii), and a wavy line represents a bond.

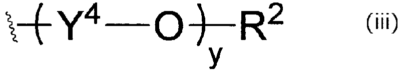

In the formula, Y⁴ represents a C1-4 alkylene group, and R² represents a C1-8 alkyl group, and y is 3 to 20.

### [m, n]

In the general formula (I), the sum (m+n) of the average number m and the average number n is 3. However, m is an integer of 1 or more. n is an integer of 0 or more.

### [R]

In the general formula (I), R represents a group of general formula (II).

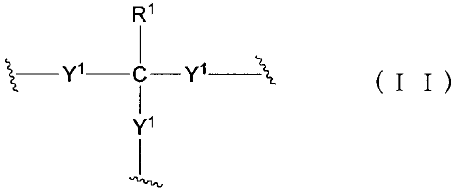

In the general formula (II), a plurality of Y¹s each independently represent a single bond or a divalent C1-20 hydrocarbon group which may have an ester structure and/or an ether structure. The plurality of Y¹s may be identical to or different from each other. R¹ represents a hydrogen atom or a C1-12 (preferably C1-5) monovalent hydrocarbon group. A wavy line represents a bond.

At least one of the plurality of Y¹s preferably have an ester structure.

General formula (II) [Y¹]

In the general formula (I), a plurality of Y¹s each independently represent a single bond, or, a C1-20 (preferably C1-10, and more preferably C1-5) divalent hydrocarbon group which may have an ester structure [-C(=O)-O-] and/or an ether structure (-O-). The plurality of Y¹s may be identical to or different from each other.

At least one of the plurality of Y¹s preferably have an ester structure.

Examples of the divalent C1-20 hydrocarbon group having an ester structure and/or an ether structure include groups represented by -(CH₂)ₙ₁-X-(CH₂)ₙ₂- (wherein n1 and n2 each independently represent an integer of 0 to 10 (preferably 1 to 4), provided that both n1 and n2 do not represent 0 simultaneously, and at least one of n1 and n2 which binds with NCO preferably represents 1 or more, and X represents an ester group or an ether group).

### [R¹]

R¹ represents a hydrogen atom or a C1-12 (preferably C1-6, and more preferably C1-3) monovalent hydrocarbon group. The hydrocarbon group as R¹ is not particularly limited, and examples thereof include alkyl groups, alkenyl groups, and alkynyl groups, and the hydrocarbon group is preferably an alkyl group. R¹ preferably represents a hydrogen atom.

The molecular weight of a triisocyanate as a base of the group of the formula (II) is preferably 139 to 1000.

The lower limit of the molecular weight is more preferably 150 or more, even more preferably 180 or more, and particularly preferably 200 or more.

The upper limit of the molecular weight is more preferably 800 or less, even more preferably 600 or less, and particularly preferably 400 or less.

The crystalline nature can be suppressed by limiting the molecular weight to the lower limit or more, and the low viscosity can be easily obtained by limiting the molecular weight to the upper limit or less.

The hydrocarbon group of the plurality of Y¹s preferably has an aliphatic group and/or an aromatic group so as to decrease the viscosity of the triisocyanate. In addition, R¹ preferably represents hydrogen.

The hydrocarbon group of the plurality of Y¹s preferably has an aliphatic group and/or an alicyclic group so as to improve the weather resistance when used as a curing agent of a coating composition.

At least one of the plurality of Y¹s preferably has an ester group so as to improve the heat resistance, separately.

At least one of the plurality of Y¹s is preferably constituted by a hydrocarbon group having an ether structure so as to improve the hydrolysis resistance, separately.

The isocyanate compound of general formula (I) may be obtained, for example, by reacting an isocyanate group of a triisocyanate compound, such as 4-isocyanatemethyl-1,8-octamethylenediisocyanate (hereinafter, referred to as NTI, the molecular weight thereof is 251), 1,3,6-hexamethylene triisocyanate (hereinafter, referred to as HTI, the molecular weight thereof is 209) disclosed in Japanese Unexamined Patent Application Publication No. Sho 57-198760, bis(2-isocyanatoethyl)2-isocyanato glutarate (hereinafter, referred to as GTI, the molecular weight thereof is 311) disclosed in Japanese Examined Patent Application Publication No. Hei 4-1033, or lysine triisocyanate (hereinafter, referred to as LTI, the molecular weight thereof is 267) disclosed in Japanese Unexamined Patent Application Publication No. Sho 53-135931, with an active hydrogen-containing hydrophilic compound.

Among the triisocyanate compounds, NTI, GTI, or LTI is preferable, NTI or LTI is more preferable, and LTI is particularly preferable, from the viewpoint of improving the reactivity of isocyanate groups.

The triisocyanate may be obtained by subjecting an amino acid derivative or an amine such as an ether amine or an alkyl triamine to isocyanate-forming reaction. Examples of the amino acid derivative include 2,5-diaminovaleric acid, 2,6-diaminohexanoic acid, asparaginic acid, and glutamic acid. These amino acids are diamine monocarboxylates or monoamine dicarboxylate, and therefore these amino acids can be made to be amines having an ester group by esterifying a carboxyl group thereof with an alkanol amine such as ethanol amine. Thus, a triamine having a resultant ester group can be made to be a triisocyanate having an ester structure by phosgenation or the like.

Examples of the ether amine include polyoxyalkylenetriamine manufactured by MITSUI FINE CHEMICAL Inc., under the trade name of "T403". The ether amines are triamines, and may be made to be triisocyanate having an ether structure by phosgenation of amine or the like.

Examples of the alkyl triamine include triisocyanatononane (4-aminomethyl-1,8-octanediamine). The alkyl amine is a triamine, and can be made to be a triisocyanate having only hydrocarbon by phosgenation of the amine.

In the present invention, the isocyanate compound of general formula (I) is a compound represented by any one of the following general formula (I)-1 to (I)-3.

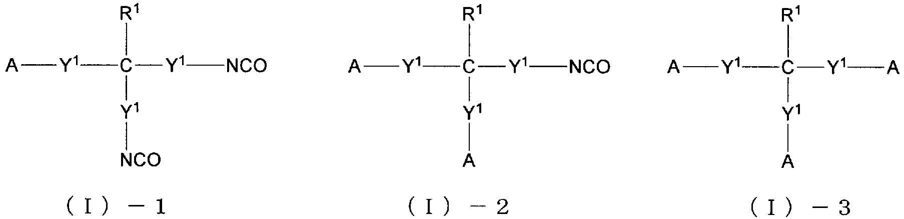

In the general formulae (I)-1, (I)-2, and (I)-3, A, Y¹, and R¹ represent the same meaning as those of A, Y¹, and R¹ of the general formula (I) or the general formula (II).

Although the viscosity of the isocyanate composition according to the present embodiment at 25°C is not particularly limited, the viscosity is preferably 5 mPa • s to 1,000 mPa • s, more preferably 10 mPa • s to 500 mPa • s, and even more preferably 10 mPa • s to 250 mPa • s.

In the case where the viscosity is equal to or more than the lower limit, the hardenability tends to be excellent. In the case where the viscosity is equal to or less than the upper limit, the workability tends to be excellent. The viscosity may be measured using an E-type viscometer (manufactured by Tokimec, Inc.).

The average number of NCO groups (average functional group number) per molecule in the isocyanate composition according to the present embodiment is preferably 2.0 to 3.0, more preferably 2.1 to 3.0, even more preferably 2.2 to 3.0, and particularly preferably 2.5 to 3.0 in terms of the drying property and the water-resistance.

### [Active hydrogen-containing hydrophilic compound]

Although the active hydrogen-containing hydrophilic compound according to the present embodiment is not particularly limited, the active hydrogen-containing hydrophilic compound is preferably at least one selected from the group consisting of anionic compounds, cationic compounds, and nonionic compounds. It is preferable that the anionic compounds, the cationic compounds, or the nonionic compounds each independently contain an active hydrogen group so as to react an isocyanate group contained in the isocyanate composition therewith. Although the active hydrogen group is not particularly limited, examples thereof include a hydroxyl group, an amino group, a mercapto group, and a carboxylic acid group.

### Anionic compound

Although the anionic compound is not particularly limited, at least one selected from the group consisting of carboxylic acid group-containing compounds, phosphoric acid group-containing compounds, and sulfonic acid group-containing compounds is preferable, and at least one selected from phosphoric acid group-containing compounds and sulfonic acid group-containing compounds is more preferable.

Although the carboxylic acid group-containing compound is not particularly limited, examples thereof include hydroxyl group-containing carboxylic acids such as monohydroxy carboxylic acids, such as 1-hydroxyacetic acid, 3-hydroxypropanoic acid, 12-hydroxy-9-octadecanoic acid, hydroxypivalic acid, and lactic acid; and polyhydroxy carboxylic acids such as dimethylolacetic acid, 2,2-dimethylolbutyric acid, 2,2-dimethylolpentanoic acid, dihydroxysuccinic acid, and dimethylolpropionic acid. Among these, hydroxy pivalic acid and dimethylolpropionic acid are preferable.

Although the phosphoric acid group-containing compound is not particularly limited, examples thereof include acidic phosphoric acid esters, acidic phosphorous acid esters, acidic hypophosphorous acid esters, and particular polyether phosphonates (such as those commercially available from Solvay Nicca, Ltd., under the trade name of "RHODAFAC" (trademark)). Among these, acidic phosphoric acid esters are preferable, and acidic phosphoric acid esters of the following formula (B) are preferable.

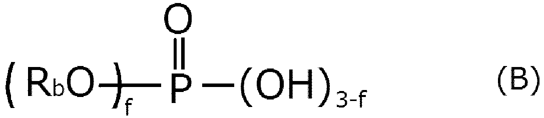

In the formula, Rb represents a C2-10 (preferably3-8) alkyl group, and f represents 1 or 2.

In terms of the water dispersibility, the phosphorus atom content of the isocyanate composition, relative to the total mass (100% by mass) of the isocyanate composition, is preferably 0.03% by mass or more, more preferably 0.05% by mass or more, and even more preferably 0.1% by mass or more. When the phosphorus atom content is equal to or more than the lower limit, the surface tension is reduced, and higher water dispersibility tends to be exhibited.

In terms of the coating physical properties, the phosphorus atom content of the isocyanate composition is preferably 6.0% by mass or less, more preferably 3.0 mass% or less, and even more preferably 1.0 mass% or less, relative to the total amount (100 mass%) of the isocyanate composition. When the phosphorus atom content is equal to or less than the upper limit, the amount of isocyanate groups to be used in crosslinking is increased, and thereby the coating physical properties tend to be further improved.

Although the method for adjusting the content within the above-mentioned range is not limited to the following method, examples thereof include a method in which a blend ratio of the phosphoric acid group-containing compound and a starting isocyanate composition is adjusted. In addition, the content is measured in accordance with a method described in examples.

The anionic compound is preferably a sulfonic acid group-containing compound. Although the sulfonic acid group-containing compound is not particularly limited, examples thereof include hydroxy group-containing sulfonic acids such as 2-hydroxyethanesulfonic acid, 3-hydroxypropanesulfonic acid, 4-hydroxybutanesulfonic acid, 5-hydroxypentanesulfonic acid, 6-hydroxyhexanesulfonic acid, hydroxybenzenesulfonic acid, hydroxy(methyl)benzenesulfonic acid, 4-(2-hydroxyethyl)-1-piperazineethanesulfonic acid, 4-(2-hydroxyethyl)-1-piperazinepropanesulfonic acid, 2-hydroxy-3-morpholinopropanesulfonic acid, and particular polyether sulfonates such as those commercially available under the trade name "Tegomer" (trademark) (manufactured by The Goldschmidt AG, Essen, Germany). Additional examples include amino group-containing sulfonic acids such as 2-aminoethanesulfonic acid, 2-methylaminoethanesulfonic acid, 2-(cyclohexylamino)-ethanesulfonic acid, 3-(cyclohexylamino)-propanesulfonic acid, 4-aminotoluene-2-sulfonic acid, 5-aminotoluene-2-sulfonic acid, 2-aminonaphthalene-4-sulfonic acid, 4-aminobenzenesulfonic acid, and 3-aminobenzenesulfonic acid.

Among the above compounds, hydroxyl C1-6 alkanesulfonic acids such as 2-hydroxyethanesulfonic acid and 3-hydroxypropanesulfonic acid, hydroxybenzenesulfonic acid, hydroxy(methyl)benzenesulfonic acid, 2-(cyclohexylamino)-ethanesulfonic acid, and 3-(cyclohexylamino)-propanesulfonic acid are preferable, hydroxyl C1-6 alkanesulfonic acids are more preferable, and 2-hydroxy ethanesulfonic acid or 3-hydroxy propanesulfonic acid is even more preferable.

The acid group such as a carboxylic acid group, phosphoric acid group, or sulfonic acid group of the anionic compound is preferably neutralized with an inorganic base or an organic amine compound. Examples of the inorganic base include: alkali metals such as lithium, sodium, potassium, rubidium, and cesium; alkaline-earth metals such as magnesium, calcium, strontium, and barium; metals such as manganese, iron, cobalt, nickel, copper, zinc, silver, cadmium, lead, and aluminum; and ammonia.

Examples of the organic amine compound include: linear tertiary amines such as trimethylamine, triethylamine, tripropylamine, tributylamine, trioctylamine, trilaurylamine, tridecylamine, and tristearylamine; branched tertiary amines such as triisopropylamine, triisobutylamine, tri-2-ethylhexylamine, and tri-branched tridecylamine; tertiary amines having mixed hydrocarbon groups such as N,N-dimethylethylamine, N,N-dimethylpropylamine, N,N-dimethylisopropylamine, N,N-dimethylbutylamine, N,N-dimethylisobutylamine, N,N-dimethyloctylamine, N,N-dimethyl-2-ethylhexylamine, N,N-dimethyllaurylamine, N,N-dimethyl(branched)tridecylamine, N,N-dimethylstearylamine, N,N-diethylbutylamine, N,N-diethylhexylamine, N,N-diethyloctylamine, N,N-diethyl-2-ethylhexylamine, N,N-diethyllaurylamine, N,N-diisopropylmethylamine, N,N-diisopropylethylamine, N,N-diisopropylbutylamine, and N,N-diisopropyl-2-ethylhexylamine; alicyclic tertiary amines such as N,N-dimethylcyclohexylamine, N,N-diethylbenzylamine, N,N-diethylcyclohexylamine, N,N-dicyclohexylmethylamine, N,N-dicyclohexylethylamine, and tricyclohexylamine; tertiary amines having an aromatic ring substituent such as N,N-dimethylbenzylamine, N,N-diethylbenzylamine, N,N-dibenzylmethylamine, tribenzylamine, N,N-dimethyl-4-methylbenzylamine, N,N-dimethylphenylamine, N,N-diethylphenylamine, and N,N-diphenylmethylamine; cyclic amines such as N-methylpyrrolidine, N-ethylpyrrolidine, N-propylpyrrolidine, N-butylpyrrolidine, N-methylpiperidine, N-ethylpiperidine, N-propylpiperidine, N-butylpiperidine, N-methylmorpholine, N-ethylmorpholine, N-propylmorpholine, N-butylmorpholine, N-sec-butylmorpholine, N-tert-butylmorpholine, N-isobutylmorpholine, and quinuclidine; and mixtures of any of these amines.

A preferable compound among the above examples is at least one selected from C5-30 tertiary amines, and specific examples thereof include triethylamine, tripropylamine, tributylamine, trioctylamine, trilaurylamine, tridecylamine, triisopropylamine, triisobutylamine, tri-2-ethylhexylamine, tri-branched tridecylamine, N,N-dimethylpropylamine, N,N-dimethylisopropylamine, N,N-dimethylbutylamine, N,N-dimethylisobutylamine, N,N-dimethyloctylamine, N,N-dimethyl-2-ethylhexylamine, N,N-dimethyllaurylamine, N,N-dimethyl(branched)tridecylamine, N,N-dimethylstearylamine, N,N-diethylbutylamine, N,N-diethylhexylamine, N,N-diethyloctylamine, N,N-diethyl-2-ethylhexylamine, N,N-diethyllaurylamine, N,N-diisopropylmethylamine, N,N-diisopropylethylamine, N,N-dimethylcyclohexylamine, N,N-diethylcyclohexylamine, N,N-dicyclohexylmethylamine, N,N-dicyclohexylethylamine, N,N-dimethylbenzylamine, N,N-diethylbenzylamine, N,N-dibenzylmethylamine, tribenzylamine, N,N-dimethylphenylamine, N,N-diethylphenylamine, N,N-diphenylmethylamine, N-methylpiperidine, N-ethylpiperidine, N-methylmorpholine, N-ethylmorpholine, quinuclidine, pyridine, quinoline, and mixtures of any of these amines. More preferably, tri(C1-6alkyl)amines such as triethylamine, tripropylamine, and tributylamine, N,N-diisopropyl(C1-6alkyl)amines, such as N,N-diisopropylmethylamine, and N,N-diisopropylethylamine, and N,N-(diC1-6alkyl)cyclohexylamine, such as N,N-dimethylcyclohexylamine, and N,N-diethylcyclohexylamine can be mentioned.

Although the polyisocyanate is modified with the hydrophilic compound so as to make the polyisocyanate be dispersed in water, deterioration in the coating physical properties (hardness, solvent resistance, and water resistance) tends to be prevented by controlling the modification degree not to be excessively high. That is, the anionic compound has a high emulsifying capacity and therefore can provide a high emulsifying effect even at a small amount.

In terms of the water dispersibility, the sulfur atom content of the isocyanate composition is preferably 0.03% by mass or more, more preferably 0.05% by mass or more, and even more preferably 0.08% by mass or more, based on the total amount (100% by mass) of the isocyanate composition. When the sulfur atom content is equal to or more than the lower limit, the surface tension is reduced, and thereby higher water dispersibility tends to be exhibited.

In terms of the coating physical properties, the sulfur atom content of the isocyanate composition is preferably 3.0% by mass or less, more preferably 2.5% by mass or less, and even more preferably 2.0% by mass or less, based on the total amount (100% by mass) of the isocyanate composition. When the content is equal to or less than the upper limit, the amount of isocyanate groups to be used in crosslinking is increased, and thereby the coating physical properties tend to be further improved.

Although the method for controlling the content within the above range is not limited to the following method, examples thereof include a method in which the blending ratio between the sulfonic acid group-containing compound and the starting isocyanate composition is adjusted. The content is measured by the method described in Examples.

Although the method for reacting the starting isocyanate composition and the anionic compound is not particularly limited, examples thereof include a method in which the terminal isocyanate group of the isocyanate compound of the starting isocyanate composition and the active hydrogen group of the anionic compoundare reacted.

### Cationic compound

Although the cationic compound is not particularly limited, examples thereof include hydroxy group-containing amine compounds such as dimethylethanolamine, diethylethanolamine, diethanolamine, methyldiethanolamine, N,N-dimethylaminohexanol, N,N-dimethylaminoethoxyethanol, N,N-dimethylaminoethoxyethoxyethanol, N,N,N'-trimethylaminoethylethanolamine, and N-methyl-N-(dimethylaminopropyl)aminoethanol. The tertiary amino group (cationic hydrophilic group) modified with the polyisocyanate may be quaternized with dimethyl sulfate or diethyl sulfate. Among the above compounds, dimethylethanolamine, diethylethanolamine, N,N-dimethylaminohexanol, N,N-dimethylaminoethoxyethanol, and N,N-dimethylaminoethoxyethoxyethanol are preferable.

The tertiary amino group of the cationic compound is preferably neutralized with an anionic group-containing compound. Although an anionic group thereof is not particularly limited, examples thereof include a carboxyl group, a sulfonic acid group, a phosphoric acid group, a halogen group, and a sulfuric acid group. Although the carboxyl group-containing compound is not particularly limited, examples thereof include formic acid, acetic acid, propionic acid, butyric acid, and lactic acid. Although the sulfone group-containing compound is not particularly limited, examples thereof include ethanesulfonic acid. Although the phosphoric acid group-containing compound is not particularly limited, examples thereof include phosphoric acid and acidic phosphoric acid esters. Although the halogen group-containing compound is not particularly limited, examples thereof include hydrochloric acid. Although the sulfuric acid group-containing compound is not particularly limited, examples thereof include sulfuric acid. Among the above compounds, compounds having one carboxyl group are preferable, and acetic acid, propionic acid, and butyric acid are more preferable.

### Nonionic compound

Although the nonionic compound is not particularly limited, examples thereof include polyalkylene glycol alkyl ether, and the polyalkylene glycol alkyl ether preferably has a structure of the following general formula (III).

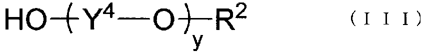

In the general formula (III), Y⁴ represents a C1-4 alkylene group, R² represents a C1-8 alkyl group, and the average number of repeating unit y of alkylene glycol is 3.0 to 20.

### [Y⁴]

Y⁴ in the general formula (III) represents a C1-4 alkylene group. Examples of the alkylene group include a methylene group, a dimethylene group, a trimethylene group, and a tetramethylene group. In terms of the impartation of hydrophilicity, a C1-3 alkylene group is preferable. In terms of the impartation of higher hydrophilicity, an ethylene group having two carbon atoms is more preferable.

### [R2]

In the general formula (III), R² represents a C1-8 alkyl group. Examples of the alkyl group include a methyl group, an ethyl group, a propyl group, an isopropyl group, a n-butyl group, an isobutyl group, and a tert-butyl group.

In terms of the impartation of hydrophilicity, a C1-4 alkyl group is preferable. In terms of the impartation of higher hydrophilicity, a methyl group is more preferable.

When a polyisocyanate is mixed with an aqueous primary component, the problem of viscosity increase caused by mixing with the primary component often arises. If the amount of viscosity increase is large, the polyisocyanate tends to fail to be uniformly dispersed in the primary component, and thus the coating physical properties tend to deteriorate.

The average number of repeating unit y of alkylene glycol is preferably 3.0 to 20, more preferably 3.5 to 16, even more preferably 4.0 to 12, and particularly preferably 6.0 to 12, in terms of the water dispersibility and the dispersibility in a primary component. When the average number y is equal to or more than the lower limit, the emulsifying capacity is increased, and thereby the dispersibility tends to be improved. When the average number y is equal to or less than the upper limit, the increase in viscosity is prevented, and thereby dispersing tends to be easy. The polyalkylene glycol alkyl ether used may consist of one kind of components differing in the average number of n or may comprise two or more types of components differing in the average number of n. The average number of n of the polyalkylene glycol alkyl ether used as a starting material is measured by the method described in Examples below.

Although the polyalkylene glycol alkyl ether is not particularly limited, examples thereof include polyethylene glycol (mono)methyl ether, poly(ethylene, propylene) glycol (mono)methyl ether, and polyethylene glycol (mono)ethyl ether. Polyethylene glycol (mono)methyl ether is preferable in terms of impartation of hydrophilicity.

The number of hydroxy groups of the polyalkylene glycol alkyl ether is preferably one in terms of reducing the viscosity of the isocyanate composition.

The isocyanate composition according to the present embodiment preferably contains a moiety derived from the hydrophilic compound (a residual group A in the general formula(I)) in an amount of 0.5% by mass to 50% by mass, based on the total amount (100% by mass) of the isocyanate composition. The lower limit thereof is preferably 2% by mass, and more preferably 3% by mass, in terms of the water dispersibility. The upper limit thereof is more preferably 40% by mass, even more preferably 35% by mass, and particularly preferably 30% by mass, in terms of the drying property and the water-resistance.

When the content of the moiety derived from the hydrophilic compound (preferably, a group of the general formula (iii), derived from the polyalkylene glycol alkyl ether of the general formula (III)) is 0.5% by mass to 50% by mass, the amount of isocyanate groups to be used in crosslinking is increased, and thereby the coating physical properties (external appearance, hardness, surface drying property, and water resistance) and the moisture stability tend to be further improved

Although the method for controlling the content within the range from 0.5% by mass to 50% by mass is not particularly limited, examples thereof include in which the mixing ratio between the polyalkylene glycol alkyl ether and the isocyanate is adjusted. The content is measured by the method described in Examples.

The proportion of the hydrophilic compound modified (the modification degree) in the isocyanate composition refers to the proportion of the active hydrogen groups bound with the hydrophilic compound reacted with isocyanate groups based on 100 equivalents of isocyanate groups of the polyisocyanate which is a starting material.

The modification degree is preferably 0.1% by mol to 50% by mol. The lower limit thereof is more preferably 0.2% by mol, even more preferably 0.3% by mol, and particularly preferably 0.4% by mol in terms of the water dispersibility. The upper limit thereof is more preferably 40% by mol, even more preferably 35% by mol, and particularly preferably 30% by mol, in terms of low viscosity, drying property, and water-resistance.

The modification degree is measured by the method described in Examples.

### [Molar ratio of urea group]

A in the general formula (I) and in the present invention has a urea group, and the mole fraction of the urea group derived from isocyanate group, relative to the total mol of the isocyanate group and the urea group the in the general formula (I) (urea group / (isocyanate group + urea group) × 100) is 0.01% by mol to 10% by mol. The lower limit thereof is more preferably 0.02% by mol, and even more preferably 0.04% by mol in terms of the improvement of the wet-adhesion resistance. The upper limit thereof is more preferably 5% by mol, and even more preferably 2% by mol, in terms of the low viscosity, the water dispersibility, and the water-resistance.

The mole fraction is measured by the method described below.

The isocyanate composition is dissolved in a deuterated chloroform at a concentration of 10% by mass, and the resultant solution is subjected to measurement with ¹³C-NMR (manufactured by Bruker, under the trade name of FT-NMR DPX-400). A carbon atom signal of the deuterated chloroform at 77.0 ppm is defined as the chemical shift standard. The signal area of carbon atoms of urea groups in the vicinity of 157.8 ppm and the signal area of carbon atoms of isocyanate groups in the vicinity of 121.5 ppm are measured, and the mole fraction of urea groups derived from isocyanate groups, relative to the total mol of isocyanate groups and urea groups in the isocyanate composition, is calculated based on the resultant areas. In the case where the isocyanate is a blocked isocyanate compound, the mole fraction is calculated by the same way.

### [Phosphoric acid compound]

The isocyanate composition according to the present embodiment preferably contains a phosphoric acid compound.

Although the phosphoric acid compound is not particularly limited, examples thereof include acidic phosphoric acid esters, acidic phosphorous acid esters, acidic hypophosphorous acid esters, and particular polyether phosphonates (such as those commercially available from Solvay Nicca, Ltd., under the trade name of "RHODAFAC" (trademark)). Among these, acidic phosphoric acid esters are preferable.

The acid phosphoric acid ester is a compound having both an acid group and an ester group, and examples thereof include C2-8 monoalkyl phosphates, monoalkyl phosphites, and C4-16 dialkyl phosphates, dialkyl phosphites, dilauryl phosphate, diphenyl phosphate, monolauryl phosphate, monophenyl phosphate, dilauryl phosphite, diphenyl phosphite, monolauryl phosphite, and monophenyl phosphite. The acid phosphoric acid ester is preferably a C3-8 monoalkyl phosphate or a C6-16 dialkyl phosphate, and more preferably a C3-8 monoalkyl phosphate such as monobutyl phosphate. One kind of the acid phosphoric acid ester may be added alone, or at least two kinds thereof may be added in combination, or sequentially.

The lower limit of the content of phosphorus atoms of the phosphoric acid compound, based on the total amount of the isocyanate composition (100% by mass), is preferably 0.0001% by mass or more, more preferably 0.0002% by mass or more, and even more preferably 0.0005% by mass or more, in terms of the water dispersibility.

The upper limit of the content of phosphorus atoms of the phosphoric acid compound, based on the total amount of the isocyanate composition (100% by mass), is preferably 1.0% by mass or less, more preferably 0.5% by mass or less, and even more preferably 0.2% by mass or less, in terms of the external appearance of a resultant coating film.

Although the phosphoric acid compound may be added before, during, or after the reaction of the triisocyanate compound and the polyalkylene glycol alkyl ether, for example, the phosphoric acid compound is preferably added before the reaction in terms of the improvement of the water dispersibility. The content may be determined by the ways described in examples.

### <Production method of aqueous polyisocyanate dispersion>

Although the method for reacting the triisocyanate and the hydrophilic compound is not particularly limited, examples thereof include a method in which an isocyanate group of the triisocyanate and an active hydrogen group of the hydrophilic compound are reacted, as described below.

Although the reaction temperature and the reaction time may be appropriately determined depending on the reaction progress at the reaction step, the reaction temperature is preferably 0°C to 150°C, and the reaction time is preferably 0.5 hours to 48 hours.

A conventionally-known catalyst may be used in accordance with circumstances at the reaction step. Specific examples of the catalyst include: organic tin compounds such as tin octanoate, tin 2-ethyl-1-hexanoate, tin ethyl caproate, tin laurate, tin palmitate, dibutyltin oxide, dibutyltin dichloride, dibutyltin diacetate, dibutyltin dimalate, dibutyltin dilaurate, dioctyltin diacetate, and dioctyltin dilaurate; zinc chloride, organic zinc compounds such as zinc octanoate, zinc 2-ethyl-1-hexanoate, zinc 2-ethylcaproate, zinc stearate, zinc naphthenate, and zinc acetylacetonate; organic titanium compounds; organic zirconium compounds; tertiary amines such as triethylamine, tributylamine, N,N-diisopropylethylamine, and N,N-dimethylethanolamine; and diamines such as triethylenediamine, tetramethylethylenediamine, and 1,4-diazabicyclo[2.2.2]octane. One of these or a mixture of two or more of these may be used. Among these, organic tin compounds such as dibutyltin dilaurate are preferable.

In addition, it is preferable that the reaction be allowed to proceed while maintaining water such that the mole fraction of urea groups derived from isocyanate groups in the general formula (I) in the isocyanate composition (urea groups / (isocyanate groups + urea groups) × 100) is 0.01% by mol to 10% by mol. Water may be added by adding a starting hydrophilic compound containing water as a raw material, adding water before the reaction of the triisocyanate and the hydrophilic compound, or adding water after the reaction of the triisocyanate and the hydrophilic compound, followed by conducting heating and stirring. The amount of water, relative to the total amount of the triisocyanate and the hydrophilic compound, is preferably 10 ppm to 5000 ppm. The lower limit thereof is more preferably 30 ppm, and even more preferably 50 ppm, in terms that the wet-adhesion resistance becomes excellent. The upper limit thereof is more preferably 3000 ppm, and even more preferably 1000 ppm, in terms of the drying property and the water-resistance.

In the production method of the isocyanate composition according to the present embodiment, a solvent may be used or may not be used. As the solvent available in the production method of the isocyanate composition according to the present embodiment may be a hydrophilic solvent or a hydrophobic solvent.

Examples of the hydrophobic solvent include: mineral spirit, solvent naphtha, LAWS (Low Aromatic White Spirit), HAWS (High Aromatic White Spirit), toluene, xylene, cyclohexane; esters such as ethyl acetate and butyl acetate, and ketones such as acetone, methyl ethyl ketone, methyl isobutyl ketone and cyclohexanone. Among these, ketones such as acetone are preferable.

Examples of the hydrophilic solvent include alcohols such as methanol, ethanol, propanol, butanol, isopropanol and 2-ethylhexanol; ethers such as diethylene glycol dimethyl ether, diethylene glycol diethyl ether, diethylene glycol dibutyl ether, and dipropylene glycol dimethyl ether; and esters of ether alcohols, such as ethylene glycol monomethyl ether acetate, ethylene glycol monoethyl ether acetate, ethylene glycol monobutyl ether acetate, diethylene glycol monoethyl ether acetate, diethylene glycol monobutyl ether acetate, propylene glycol monoethyl ether acetate, propylene glycol monomethyl ether acetate, and dipropylene glycol monomethyl ether acetate. These may be used solely or used as a mixture thereof. Among these, C1-8 alcohols such as 2-ethylhexanol and diC1-4alkylene glycol diC1-3alkyl ether such as dipropylene glycol dimethyl ether are preferable.

In the production method of the isocyanate composition according to the present embodiment, at least one selected from the group consisting of antioxidants, light stabilizers, polymerization inhibitors and surfactants may be added in addition to the hydrophilic compound and the triisocyanate.

### <Additional isocyanate compound>

The isocyanate composition according to the present embodiment may be mixed with an isocyanate compound different from the above-mentioned isocyanate compound.

Examples of the additional isocyanate compound include di- or poly-isocyanates having aliphatic, alicyclic, or aromatic isocyanate groups. Examples of the diisocyanate include tetramethylene diisocyanate (TMDI), pentamethylene diisocyanate (PDI), hexamethylene diisocyanate (HDI), 2,2,4-trimethylhexane-1,6-diisocyanate, 2-methylpentane-1,5-diisocyanate (MPDI), 1,3-bis(isocyanatomethyl)-cyclohexane (1,3-H6-XDI), 3(4)-isocyanatomethyl-1-methylcyclohexyl isocyanate (IMCI); isophorone diisocyanate (IPDI), bis(isocyanatomethyl)-norbornane (NBDI), 1,3 -bis(isocyanatomethyl)-benzene, 1,3 -bis(2-isocyanatopropyl-2)benzene, 4,4'-dicyclohexylmethane diisocyanate (H12MDI), and lysine diisocyanate (LDI). Among these, HDI and IPDI are preferable in terms of the weather resistance and the easiness in industrial availability. One kind of these diisocyanates may be used alone or at least two kinds thereof may be used in combination.

The polyisocyanate is obtained by polymerizing diisocyanates by using a catalyst or conducting heating, and contains in a molecule thereof an isocyanurate structure, an uretdione structure, an allophanate structure, an iminooxadiazinedione structure, a urethane structure, or a biuret structure. Among these, a polyisocyanate having an isocyanurate structure is preferable in terms of the weather resistance. The polyisocyanate may be a hydrophilic polyisocyanate obtained by reacting a compound containing an active hydrogen group and a hydrophilic group (hydrophilic group-containing compound) with an isocyanate group, followed by adding a hydrophilic group thereto.

The mass ratio of the isocyanate compound and the polyisocyanate, isocyanate compound/polyisocyanate, is preferably 5/95 to 100/0, in terms of the low viscosity, the water dispersibility, and the water-resistance. In addition, the ratio is more preferably 10/90 to 100/0, and even more preferably 20/80 to 100/0.

### <Blocked isocyanate composition>

The isocyanate composition according to the present embodiment may be a blocked isocyanate composition obtained by protecting at least a part of the isocyanate groups of the isocyanate compound of general formula (I)-1 or (I)-2 with a blocking agent. Examples of the blocking agent include alcohol-based compounds, alkylphenol-based compounds, phenol-based compounds, active methylene-based compounds, mercaptan-based compounds, acid amide-based compounds, acid imide-based compound, imidazole-based compounds, urea-based compounds, oxime-based compounds, amine-based compounds, imide-based compounds, and pyrazole-based compounds. Specific examples of the blocking agent include the following.

(1) Alcohol-based compounds: such as methanol, ethanol, 2-propanol, n-butanol, sec-butanol, 2-ethyl-1-hexanol, 2-methoxyethanol, 2-ethoxyethanol, and 2-butoxyethanol; (2) alkylphenol-based compounds: mono- or di-alkylphenols having an alkyl group having at least 4 carbon atoms as a substituent, such as monoalkylphenols such as n-propylphenol, iso-propylphenol, n-butylphenol, sec-butylphenol, t-butylphenol, n-hexylphenol, 2-ethylhexylphenol, n-octylphenol, and n-nonylphenol; and dialkylphenols such as di-n-propylphenol, diisopropylphenol, isopropylcresol, di-n-butylphenol, di-t-butylphenol, di-sec-butylphenol, di-n-octylphenol, di-2-ethylhexylphenol, and di-n-nonylphenol; (3) phenol-based compounds: such as phenol, cresol, ethylphenol, styrenated phenol, and hydroxybenzoate; (4) active methylene-based compounds: such as dimethyl malonate, diethyl malonate, methyl acetoacetate, ethyl acetoacetate, and acetylacetone; (5) mercaptan-based compounds: such as butyl mercaptan, and dodecyl mercaptan; (6) acid amide-based compounds: such as acetanilide, acetamide, ε-caprolactam, δ-valerolactam, and γ-butyrolactam; (7) acid imide-based compounds: such as succinimide and maleinimide; (8) imidazole-based compounds: such as imidazole and 2-methylimidazole; (9) urea-based compounds:such as urea, thiourea and ethylene urea; (10) oxime-based compounds: such as formaldoxime, acetaldoxime, acetoxime, methylethylketoxime, and cyclohexanone oxime; (11) amine-based compounds: such as diphenylamine, aniline, carbazole, di-n-propylamine, diisopropylamine, and isopropylethylamine; (12) imine-based compounds: such as ethylene imine and polyethylene imine; (13) hydrogen sulfites; such assodium hydrogen sulfite; (14) pyrazole-based compounds: such as pyrazole, 3-methylpyrazole, and 3,5-dimethylpyrazole; and (15) triazole-based compounds; such as 3,5-dimethyl-1,2,4-triazole-based compounds.

The blocking reaction of the isocyanate composition and the blocking agent may be conducted in spite of the presence or absence of a solvent. In the case where a solvent is used, a solvent inert to an isocyanate group is required to be used. In the blocking reaction, an organic salt of metal such as tin, zinc, or lead, a tertiary amine-based compound, or an alcoholate of alkali metal such as sodium may be used as a catalyst. Although the reaction may be conducted generally at -20°C to 150°C, the reaction is preferably conducted at 30°C to 100°C. In the case of -20°C or more, the reaction speed tends to be rapid, whilst in the case of 150°C or less, the side-reaction tends to be inhibited.

Among the above-mentioned blocking agents, in terms of easy availability and the viscosity of the resultant blocked isocyanate composition, reaction temperature, and the reaction time, at least one selected from the group consisting of oxime-based compounds, acid amide-based compounds, amine-based compounds, active methylene-based compounds, and pyrazole-based compounds is preferably contained, methylethylketoxime, ε-caprolactam, diethyl malonate, ethyl acetoacetate, diisopropylamine, and 3,5-dimethylpyrazole are more preferable, methylethylketoxime, diisopropylamine, and 3,5-dimethylpyrazole are even more preferable, and 3,5-dimethylpyrazole is particularly preferable in terms that both the hardenability at low temperature and the compatibility with polyol are realized. One kind of the thermally dissociative blocking agent may be used alone, or at least two kinds thereof may be used in combination.

In the blocked isocyanate compound in which at least a part of the isocyanate groups of the isocyanate compound of the general formula (I) is protected, the protected group preferably has a structure of the following formula.

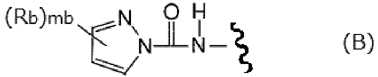

In the formula (B), Rb represents a C1-3 alkyl group, mb represent 1 or 2, and a wavy line represents a bond.

Although the viscosity of the blocked isocyanate composition according to the present embodiment at 25°C is not particularly limited, the viscosity is preferably 10 mPa • s to 1,000 mPa • s, more preferably 55 mPa • s to 1,000 mPa • s, and particularly preferably 60 mPa • s to 800 mPa • s.

In the case where the viscosity is equal to or more than the lower limit, the hardenability tends to become excellent. In the case where the viscosity is equal to or less than the upper limit, the workability tends to become excellent. The viscosity may be measured using an E-type viscometer (manufactured by Tokimec, Inc.).

### <Additional compound>

The isocyanate composition according to the present embodiment may contain at least one compound selected from the group consisting of unsaturated bond-containing compounds, inert compounds, metal atoms, basic amino compounds, and carbon dioxide, in an amount of 1.0 ppm by mass to 1.0×10⁴ ppm by mass, relative to the isocyanate compound of general formula (I), from the viewpoint of coloring suppresibility and stability improvement when stored for a long term. The amount may be 3.0 ppm by mass or more, 5.0 ppm by mass or more, or 10 ppm by mass or more, and 5.0×10³ ppm by mass or less, 3.0×10³ ppm by mass or less, or 1.0×10³ ppm by mass or less.

The unsaturated bond-containing compound according to the present embodiment preferably has an unsaturated bond between carbon atoms, between a carbon atom and a nitrogen atom, or between a carbon atom and an oxygen atom. From the viewpoint of the stability of the compound, it is preferable that the unsaturated bond be a double bond, and more preferably a double bond between carbon atoms (C=C) or a double bond between a carbon atom and an oxygen atom (C=O). In addition, it is preferable that carbon atoms constituting the compound bond to at least three atoms.

Although there is a general case where the double bond between carbon atoms is a double bond between carbon atoms constituting an aromatic ring, the unsaturated bond contained in the unsaturated bond-containing compound in the present embodiment does not contain any double bonds between carbon atoms constituting an aromatic ring.

Examples of the compound having a double bond between a carbon atom and an oxygen atom include: carbonic acid derivatives. Examples of the carbonic acid derivative include urea compounds, carbonate esters, N-unsubstituted carbamic ester, and N-substituted carbamic esters, and N-substituted carbamic esters are preferable.

The inert compounds in the present embodiment are classified into the following compound A to compound G.

Hydrocarbon compounds are classified into the compound A and the compound B, ether compounds and sulfide compounds are classified into the compounds C to E, halogenated hydrocarbon compounds are classified into the compound F, and silicon-containing hydrocarbon compounds, silicon-containing ether compounds and silicon-containing sulfide compounds are classified into the compound G. The compound A to compound G does not contain any unsaturated bonds other than aromatic rings, and the above-mentioned unsaturated bond-containing compound does not belong thereto.

Compound A: aliphatic hydrocarbon compound having a linear, branched or cyclic structure (preferably, C5-20 alkanes having a linear or branched structure, such as 2,2,4-trimethylpentane or hexadecane).

Compound B: aromatic hydrocarbon compound which may be substituted with an aliphatic hydrocarbon group.

Compound C: compound having either an ether bond or a sulfide bond and aliphatic hydrocarbon groups, in which the same kind or different kind of aliphatic hydrocarbon compounds are bonded together through the ether bond or the sulfide bond.

Compound D: compound having either an ether bond or a sulfide bond and aromatic hydrocarbon groups, in which the same kind or different kind of aromatic hydrocarbon groups are bonded together through the ether bond or the sulfide bond.

Compound E: compound having either an ether bond or a sulfide bond, aliphatic hydrocarbon group and an aromatic hydrocarbon group.

Compound F: halide in which at least one hydrogen atom constituting an aliphatic hydrocarbon compound, or at least one hydrogen atom constituting an aromatic hydrocarbon compound is substituted with a halogen atom.

Compound G: compound in which a part or a whole of carbon atoms of the compound A to compound E is substituted with silicon atoms.

The metal atom may be present as a metal ion, or as a metal atom alone. The metal atom may be one kind of metal atom or in combination of a plurality of kinds of metal atoms. The metal atom is preferably a divalent to tetravalent metal atom, and, among these, at least one metal selected from the group consisting of iron, cobalt, nickel, zinc, tin, copper, and titanium is more preferable.

The basic amino compound is an ammonia derivative such as a compound (primary) in which one hydrogen atom is substituted with an alkyl group or an aryl group; a compound (secondary) in which two hydrogen atoms are substituted therewith; and a compound (tertiary) in which three hydrogen atoms are substituted therewith. The basic amino compound preferably available according to the present invention is a secondary or tertiary amino compound, and an aliphatic amine, an aromatic amine, a heterocyclic amine, or a basic amino acid is preferably available.

The carbon dioxide may be dissolved in isocyanate under an ordinary pressure or under pressure in a pressure vessel. The moisture amount in the carbon dioxide is preferably controlled, as needed, because there is a case where carbon dioxide containing moisture causes hydrolysis of isocyanate.

The amount of halogen atoms in the isocyanate composition according to the present embodiment is preferably 1.0×10² ppm by mass or less from the viewpoint of prevention of coloring. Although the halogen atom is not particularly limited, the halogen atom is preferably chlorine and/or bromine, and more preferably at least one ion and/or compound selected from the group consisting of chlorine ion, bromine ion, hydrolyzable chlorine and hydrolyzable bromine. Examples of the hydrolyzable chlorine include a carbamoyl chloride compound in which a hydrogen chloride is added to an isocyanate group, and examples of the hydrolyzable bromine include a carbamoyl bromide compound in which a hydrogen bromide is added to an isocyanate group.

### <Coating composition>

The coating composition according to the present embodiment contains the above-mentioned isocyanate composition. The coating composition is not particularly limited, may be an organic solvent-based coating composition or a water-based coating composition in which resins as coating film forming components are dissolved or dispersed in a medium primary containing water, and is preferably the water-based coating composition in terms that the use amount of an organic solvent can be reduced. The coating composition may be used, for example, as an architectural coating material, automotive coating material, automotive refinishing coating material, coating material to be applied on plastics, tackifier, adhesive, building material, household water-based coating material, other coating material, sealing agent, ink, casting material, elastomer, foam, plastic raw material, or fiber treatment agent.

Although the resins which are the primary components of the water-based coating composition are not particularly limited, examples thereof include acrylic resins, polyester resins, polyether resins, epoxy resins, fluorine resins, polyurethane resins, polyvinylidene chloride copolymers, polyvinyl chloride copolymers, vinyl acetate copolymers, acrylonitrile-butadiene copolymers, polybutadiene copolymers, and styrene-butadiene copolymers.

Although the acrylic resins are not particularly limited, examples thereof include: (meth)acrylic esters, such as methyl (meth)acrylate, ethyl (meth)acrylate, isopropyl (meth)acrylate, n-butyl (meth)acrylate, 2-ethylhexyl (meth)acrylate, and lauryl (meth)acrylate; (meth)acrylic esters having an active hydrogen, such as 2-hydroxyethyl (meth)acrylate, 2-hydroxypropy (meth)acrylate, 2-hydroxybutyl (meth)acrylate, 3-hydroxypropyl (meth)acrylate, and 4-hydroxybutyl (meth)acrylate; unsaturated carboxylic acids, such as acrylic acid, methacrylic acid, maleic acid, and itaconic acid; unsaturated amides such as acrylamide, N-methylol acrylamide, and diacetone acrylamide; and acrylic resins obtained by polymerizing one or a mixture of other polymerizable monomers, such as glycidyl methacrylate, styrene, vinyl toluene, vinyl acetate, acrylonitrile, dibutyl fumarate, p-styrenesulfonic acid, or allyl sulfosuccinic acid. Although an emulsion polymerization method is generally adopted as a polymerization method thereof, a suspension polymerization method, a dispersion polymerization method, or a solution polymerization method may be adopted. In the emulsion polymerization, polymerization may be conducted in a stepwise manner.

Although the polyester resins are not particularly limited, examples thereof include: polyester resins obtained by condensation reaction of one or a mixture of carboxylic acids, such as succinic acid, adipic acid, sebacic acid, dimer acid, maleic anhydride, phthalic anhydride, isophthalic acid, terephthalic acid, trimellitic acid, or pyromellitic acid, with one or a mixture of polyhydric alcohols selected from the group consisting of: diols, such as ethylene glycol, diethylene glycol, triethylene glycol, propylene glycol, dipropylene glycol, tripropylene glycol, 1,2-propanediol, 1,3-propanediol, 1,2-butanediol, 1,3-butanediol, 1,4-butanediol, 2,3-butanediol, 2-methyl-1,2-propanediol, 1,5-pentanediol, 2-methyl-2,3-butanediol, 1,6-hexanediol, 1,2-hexanediol, 2,5-hexanediol, 2-methyl-2,4-pentanediol, 2,3-dimethyl-2,3-butanediol, 2-ethyl-hexanediol, 1,2-octanediol, 1,2-decanediol, 2,2,4-trimethylpentanediol, 2-butyl-2-ethyl-1,3-propanediol, and 2,2-diethyl-1,3-propanediol; triols, such as glycerin and trimethylolpropane; and tetraols, such as diglycerin, dimethylolpropane and pentaerythritol; and polycaprolactones obtained by ring-opening polymerization of ε-caprolactone with a hydroxyl group of a polyol having a low molecular weight. Among these, C2-10 alkanediols, such as 2,2,4-trimethylpentanediol, are preferable.

Although the polyether resins are not particularly limited, examples thereof include: polyether polyols obtained by adding one or a mixture of alkylene oxides, such as ethylene oxide, propylene oxide, butylene oxide, cyclohexene oxide, and styrene oxide, to one or a mixture of polyvalent hydroxy compounds using a hydroxide of lithium, sodium, potassium, or the like, or a strong basic catalyst such an alcoholate or an alkylamine; polyether polyols obtained by reacting an alkylene oxide with a polyfunctional compound such as ethylenediamine; polyether polyols obtained by ring-opening polymerization of cyclic ethers such as tetrahydrofuran; and polymer polyols obtained by polymerization of acrylamides using these polyethers as a medium.

Among these resins, acrylic resins or polyester resins are preferable. In addition, a melamine-based curing agent, or a resin such as urethane dispersion or urethane acrylic emulsion may be used together, as needed.

It is preferable that these resins be emulsified, dispersed or dissolved in water, and therefore carboxyl groups, sulfone groups, or the like, contained in the resins, may be neutralized.

As a neutralizing agent available to neutralize the carboxyl groups, the sulfone groups, or the like, at least one selected from the groups consisting of ammonia and water-soluble amino compounds such as monoethanolamine, ethylamine, dimethylamine, diethylamine, triethylamine, propylamine, dipropylamine, isopropylamine, diisopropylamine, triethanolamine, butylamine, dibutylamine, 2-ethylhexylamine, ethylenediamine, propylenediamine, methylethanolamine, dimethylethanolamine, diethylethanolamine, and morpholine, may be used. As the neutralizing agent, the triethylamine and dimethylethanolamine, that are tertiary amines, are preferable.

Furthermore, there may be incorporated an additive which is commonly added to a coating material, such as an inorganic pigment, organic pigment, extender pigment, silane coupling agent, titanium coupling agent, organic phosphoric acid salt, organic phosphorous acid salt, thickener, leveling agent, thixotropy imparting agent, anti-foaming agent, anti-freezing agent, delusterant, crosslinking catalyst, anti-sticking agent, dispersant, wetting agent, filler, plasticizer, lubricant, reductant, preservative, anti-fungal agent, deodorant, anti-yellowing agent, ultraviolet absorber, anti-static agent, electrostatic modifier, or anti-setting agent. To improve dispersibility in a coating material, a surfactant may be further added. To improve the storage stability of a coating material, an antioxidant, light stabilizer, or polymerization inhibitor may be further added.

Although the curing accelerating catalyst is not particularly limited, examples thereof include: metal salts such as dibutyltin dilaurate, tin 2-ethylhexanoate, zinc 2-ethylhexanoate, and cobalt salts; and tertiary amines such as triethylamine, pyridine, methylpyridine, benzyldimethylamine, N, N-dimethylcyclohexylamine, N-methylpiperidine, pentamethyl diethylene triamine, and N,N'-endethylene piperazine, N,N'-dimethyl piperazine.

### <Coating film>

A coating film according to the present invention is obtained by curing the coating composition according to the present invention. Specifically, the coating film may be formed by applying the coating composition on a base material, such as a metal, wood, glass, stone, ceramic material, cement, hard and flexible plastic, textile, leather product, paper, or the like, and then drying the resultant.

### Examples

Hereinafter, although the present invention will be described further specifically by showing specific examples and comparative examples, the present invention is not limited to the following examples. The terms "parts", "%" and "ppm" means "parts by mass", "% by mass" and "ppm by mass", respectively, unless otherwise specified.

### <NCO content in isocyanate composition>

The NCO content (% by mass) was determined by neutralizing isocyanate groups in a sample with an excessive amount of 2N amine, followed by subjecting the resultant to back titration using a 1N hydrochloric acid.

### <Average number of repeating unit y of alkylene glycol in isocyanate composition>

The average number of y was determined by proton nuclear magnetic resonance (NMR) using an isocyanate composition as a sample and the following apparatus under the following conditions. The average number of repeating unit y of alkylene glycol in the isocyanate composition was determined by homologizing the integral value of relative intensity corresponding to an alkylene group and the integral value of relative intensity corresponding to an alkyl group.
NMR apparatus: Bruker Biospin AVANCE 600 (trade name)
Measured nucleus: 1H
Resonance frequency: 600 MHz
Solvent: CDCl₃
Accumulation number: 256

### <Modification degree of polyalkylene glycol alkyl ether>

An isocyanate composition is used as a sample to determine the modification degree of a hydrophilic compound, relative to 100 equivalents of isocyanate groups of a raw polyisocyanate, by calculating peak area ratios of unmodified raw isocyanate, monomodified raw isocyanate, dimodified raw isocyanate, and trimodified raw isocyanate, measured by liquid chromatography (LC) at 220 nm. The used apparatus and conditions are described below
LC apparatus: UPLC (trade name) manufactured by Waters Corporation.
Column: ACQUITY UPLC HSS T3 1.8 µm, C18 inner diameter 2.1 mm × length 50 mm, manufactured by Waters Corporation.
Flow rate: 0.3 mL/min
Mobile phase: A = 10 mM ammonium acetate aqueous solution, B = acetonitrile
Gradient condition: An initial composition of mobile phase was A/B=98/2, the ratio of B was increased linearly after the sample injection, and then the composition of mobile phase after ten minutes became A/B=0/100.
Detection method: Photodiode array detector was used at a measurement wave length of 220 nm.

<Content of polyalkylene glycol alkyl ether>

An isocyanate composition was used as a sample to calculate the content of polyalkylene glycol alkyl ether of a modified polyisocyanate in the isocyanate composition, from the NCO content and the molecular weight of polyalkylene glycol alkyl ether calculated from the average number of repeating unit y of alkylene glycol, and the modification degree of polyalkylene glycol alkyl ether, as described below. Content (% by mass) = NCO content (% by mass) / 100% / 42 / (100 - modification degree (% by mol)) × modification degree (% by mol) × number average molecular weight of polyalkylene glycol alkyl ether × 100%

### <Phosphorus atom content, relative to the total mass (100% by mass) of isocyanate composition>

The content of phosphorous atom derived from phosphoric acid groups in an isocyanate composition used as a sample was determined by inductively coupled plasma atomic emission spectroscopy (ICP-AES) using the following apparatus and conditions.
ICP-AES apparatus: iCAP 6300 Duo (trade name) manufactured by Thermo Fisher Scientific
High-frequency output: 1150W
Coolant gas: 12 L/min
Plasma gas: 0.5 L/min
Carrier gas: 0.5 L/min
Purge gas: 0.5 L/min
Torch: Horizontal axis
Detector: CID
Measured wave length: 180.731 nm
Pretreatment method: A sample was decomposed with a sulfuric acid and a hydrogen peroxide to obtain a sample solution.

### <Sulfur atom content, relative to the total mass (100% by mass) of isocyanate composition>

An isocyanate composition was used as a sample to determine the content of sulfur atom derived from sulfonic acid groups in the isocyanate composition by ion chromatography (IC) using the following apparatus and conditions.
IC apparatus: ICS-1500 (trade name) manufactured by Thermo Fisher Scientific
Column: AS12A.
Mobile phase: 2.7 mmol/L Na₂CO₃, 0.3 mmol/L NaHCO₃
Flow rate: 1.5 mL/min
Sample injection volume: 1 mL
Suppressor: AERS-500
Detector: Electrical conductivity detector
Pretreatment method: A sample was burned in a furnace, and the combustion gas was absorbed by an absorbing liquid.

### <Viscosity>

The viscosity was measured at 25°C using an E-type viscometer (manufactured by Tokimec, Inc.). In the measurement, a standard rotor (1° 34' × R24) was used. The number of rotation was described below.
100 rpm (at less than 128 mPa • s)
50 rpm (at 128 mPa • s to 256 mPa • s)
20 rpm (at256 mPa • s to 640 mPa • s)
10 rpm (at 640 mPa • s to 1280 mPa • s)
5 rpm (at 1280 mPa • s to 2560 mPa • s)

### <Measurement of NCO group number>

The number of NCO groups was calculated by the following formula using the functional group number (3) of triisocyanate prepared in each preparation examples and the modification degree of polyalkylene glycol alkyl ether. NCO group number = functional group number (3) of triisocyanante × (1 - modification degree of polyalkylene glycol alkyl ether / 100)

### <Effective NCO content of blocked isocyanate composition>

The effective NCO content (% by mass) was calculated by the following formula. Effective NCO content (% by mass) of blocked isocyanate composition = [(charged amount of isocyanate composition) × (NCO content (% by mass) of isocyanate compostion)]/(charged amount of blocked isocyanate composition)

### <Molar ratio of urea group (urea group / (NCO group + urea group))>

An isocyanate composition was dissolved in deuterated chloroform in a concentration of 10% by mass.

The solution was measured by 13C-NMR (FT-NMR DPX-400 manufactured by Bruker Corporation). A signal of a carbon atom of deuterated chloroform at 77.0 ppm was used as the standard of chemical shift. The signal area of carbon atoms of urea groups in the vicinity of 157.8 ppm and the signal area of carbon atoms of isocyanate groups in the vicinity of 121.5 ppm were measured, and the mole fraction of urea groups derived from isocyanate groups, relative to the total mol of isocyanate groups and urea groups in the isocyanate composition, was determined, based on the obtained areas.

### <Decreasing degree of viscosity of isocyanate composition>

The viscosity of an isocyanate mixture was measured using an E-type viscometer (manufactured by Tokimec, Inc.) as described above except that the measured temperature was changed to conduct evaluation in accordance with the following criteria.
A: The temperature at which the viscosity reached 250 mPa • s was 25°C or less.
B: The temperature at which the viscosity reached 250 mPa • s exceeded 25°C, and the temperature at which the viscosity reached 1000 mPa • s was 25°C or less.
C: The temperature at which the viscosity reached 1000 mPa • s exceeded 25°C

### < Decreasing degree of viscosity of blocked isocyanate composition>

The viscosity of a blocked isocyanate composition was measured using an E-type viscometer (manufactured by Tokimec, Inc.) as described above except that the measured temperature was changed to conduct evaluation in accordance with the following criteria.
A: The temperature at which the viscosity reached 1000 mPa • s was 25°C or less.
B: The temperature at which the viscosity reached 1000 mPa • s exceeded 25°C.

### <Water dispersibility>

(1) A50 mL of an isocyanate composition or a blocked isocyanate composition was put in a PET screw bottle such that the solid content became 3 g, and then 27 g of deionized water was added thereto. (2) The mixture was stirred for 1 minute using a spatula, and then observed visually to conduct evaluation in accordance with the following criteria.
A: The mixture was easily dispersed and scarcely remained in the spatula.
B: The viscosity of the mixture increased and the mixture remained largely in the spatula.
C: The viscosity of the mixture significantly increased and it was difficult to stir the mixture.

### <Evaluation of dispersibility in primary component of aqueous dispersion of isocyanate composition>

The isocyanate coating composition was applied on a glass plate such that the thickness became 40 µm after drying, and the cured at 23°C and 50% RH. After a predetermined time elapsed, the gloss of the coating film was measured using a gloss meter (a digital variable angle gloss meter UDV-6P (trade name) manufactured by Suga Test Instruments Co., Ltd.) at 60° in accordance with conditions defined in JIS Z8741.
A: 85% or more
B: 65% or more but less than 85%
C: less than 65%

### <Evaluation method of drying property of isocyanate composition>

An acrylic dispersion (manufactured by Nuplex Resin under the trade name of "SETAQUA 6510" with a resin concentration of 42% and a hydroxyl group concentration of 4.2% (based on resin)) and each isocyanate composition were mixed such that the equivalent ratio of isocyanate group / hydroxy group was 1.0, and adding water thereto such that the amount of the solid content in the resultant composition was 40% by mass. The prepared coating composition was coated on a glass plate such that the thickness of the dried coating film was 40 µm, and then cured at 23°C and 50% RH. After a predetermined time elapsed, a cotton ball (having a cylindrical shape with a diameter of 2.5 cm and a high of 2.0 cm) was placed on the coating film and then 100 g of a weight was placed thereon for 60 seconds. Then, the weight and the cotton ball were removed therefrom, and the imprint of cotton ball on the coating film was observed to conduct evaluation in accordance with the following criteria.
A: The time required for the imprint to disappear completely was 7 hours or less.
B: The time was more than 7 hours but 8 hours or less.
C: The time was more than 8 hours but 10 hours or less.
D: The time was more than 10 hours.

### <Evaluation of drying property of blocked isocyanate coating film>

Evaluation was conducted by the same way as that of the evaluation of drying property of isocyanate coating film except that burning was conducted at 100°C for 30 minutes after conducting coating, and the evaluation was based on the following criteria.
A: The imprint of cotton ball was not confirmed.
B: The imprint of the cotton ball was confirmed.

### <Evaluation of water-resistance of isocyanate coating film>

The isocyanate coating composition was applied on an aluminum plate, which was subjected to Arozin treatment, to form a coating film having a thickness of 40 µm, and then burned for 30 minutes at 60°C when an isocyanate coating composition was used or at 120°C when a blocked isocyanate coating composition was used. Then, the coating film was cooled at 23°C and 50% RH until the next day, and then an O-ring made of silicon, the O-ring having a diameter of 30 mm, was placed on the resultant coating film, followed by pouring 0.5 g of water thereinto. The resultant was placed at 23°C for 24 hours, and then water remaining in the surface thereof was removed to observe the coating film and conduct evaluation in the following criteria.
A: The coating film was transparent and no blister was confirmed.
B: White turbidity or blister was scarcely confirmed.
C: White turbidity or blister was slightly confirmed.
D: White turbidity or blister was confirmed.

### <Evaluation of water-resistance of blocked isocyanate coating film>

Evaluation was conducted by the same way as that of the evaluation of water-resistance of isocyanate coating film except that burning was conducted at 120°C for 30 minutes after conducting coating.

### <Evaluation of wet-adhesion resistance of isocyanate coating film and blocked isocyanate coating film>

An acrylic dispersion (manufactured by Nuplex Resin under the trade name of "SETAQUA 6510" with a resin concentration of 42% and a hydroxyl group concentration of 4.2% (based on resin)) and water were mixed such that the final solid content became 40% by mass, and then an aqueous dispersion of the isocyanate composition was added dropwise thereto such that the equivalent ratio of isocyanate groups / hydroxyl groups became 1.25, and the resultant was mixed by conducting stirring. The prepared coating composition was applied on an aluminum plate, which was subjected to Arozin treatment, to form a coating film having a thickness of 40 µm after dring the coating film, and then the coated film was burned for 30 minutes at 140°C to cure the coating film. Water was dropped to the coating film, left still at 23°C for 24 hours, and then swabbed to conduct evaluation in accordance with JIS K5600-5-6 (coating film adherability: Cross-cut method) by counting the number of squares remaining from 100 squares.
A: 90 squares or more
B: 70 to 89 squares
C: 69 squares or less

### <External appearance of coating film>

An acrylic dispersion (manufactured by Nuplex Resin under the trade name of "SETAQUA 6510" with a resin concentration of 42% and a hydroxyl group concentration of 4.2% (based on resin)) and either an isocyanate composition or a blocked isocyanate composition were mixed such that the equivalent ratio of isocyanate groups / hydroxyl groups became 1.0, and then adding water thereto such that the solid content became 40% by mass. The prepared coating composition was applied on a glass plate to form a coating film having a thickness of 40 µm, followed by burning the coating film for 30 minutes at 60°C when an isocyanate composition was used or at 120°C when a blocked isocyanate composition was used. The gloss value of the resultant coating film was measured at 20° using "haze-gloss version 3.40" (trade name) manufactured by BYK Gardner, and a measured value of a standard black glass plate having a refractive index of 1.567 was defined as 100 gloss units. The 20° gloss of the glass plate alone used to conduct coating was measured to be 174. Evaluation was conducted in accordance with the following criteria.
A: 160 or more
B: 150 or more but less than 160
C: 100 or more but less than 150
D: less than 100

### <Average dispersion particle diameter>

The volume-average dispersion particle diameter of the aqueous dispersion evaluated in terms of the stability of the water dispersibility was measured using a dynamic light scattering type nanotrac particle size analyzer.
Apparatus: Nanotrac UPA-EX150 (manufactured by Nikkiso Co., Ltd.)
Solvent: Water
Temperature: 23°C

### <Water-dispersion stability>

The stability of water-dispersion was evaluated by mixing water and an isocyanate composition by a predetermined method and then observing an external appearance of the mixture 1 hour immediately after the mixing procedure. The case where separation was not confirmed was evaluated as A and the case where separation was confirmed was evaluated as B.

### <Evaluation of drying property of aqueous dispersion of isocyanate composition>

An acrylic dispersion (manufactured by Nuplex Resin under the trade name of "SETAQUA 6510" with a resin concentration of 42% and a hydroxyl group concentration of 4.2% (based on resin)) and water were mixed such that the final solid content of a coating composition became 40% by mass, and then an aqueous dispersion of isocyanate composition was added dropwise thereto such that the equivalent ratio of isocyanate groups / hydroxyl groups became 1.25, and the resultant was mixed by conducting stirring. The prepared coating composition was coated on a glass plate such that the thickness of the dried coating film was 40 µm, and then cured at 23°C and 50% RH. After a predetermined time elapsed, a cotton ball (having a cylindrical shape with a diameter of 2.5 cm and a high of 2.0 cm) was placed on the coating film and then 100 g of a weight was placed thereon for 60 seconds. Then, the weight and the cotton ball were removed therefrom, and the imprint of cotton ball remaining on the coating film was observed. The case where the time period required until the imprint could not be confirmed was 8 hours or less was evaluated as A, and the case where the time period exceeded 8 hours was evaluated as B.

### <Evaluation of usable time of coating material >

The coating composition prepared by the method shown in the description regarding evaluation of drying property of aqueous dispersion of isocyanate composition was left still at 23°C for 6hours, and then the resultant was checked whether the precipitate generated in the coating composition. In the case where no precipitate was confirmed, evaluation of drying property was conducted again by the same way as described above. The case where the time period required until the imprint could not be confirmed was 10 hours or less was evaluated as A, the case where the time period exceeded 10 hours was evaluated as B, and the case where precipitate generated in a coating liquid was evaluated as C.

### <Evaluation of water-resistance of coating film of aqueous dispersion>

An acrylic dispersion (manufactured by Nuplex Resin under the trade name of "SETAQUA 6510" with a resin concentration of 42% and a hydroxyl group concentration of 4.2% (based on resin)) and water were mixed such that the final solid content of a coating composition became 40% by mass, and then the aqueous dispersion of isocyanate composition was added dropwise thereto such that the equivalent ratio of isocyanate groups / hydroxyl groups became 1.25, and the resultant was mixed by conducting stirring. The prepared coating composition was coated on a glass plate such that the thickness of the dried coating film was 40 µm, and then heated at 140°C for 30 minutes to be cured. A rubber ring having a diameter of 2 cm was placed on the resultant coating film, and water was dropped thereinto. A watch glass was placed thereon so as to prevent volatilization, and left still at 23°C for 2 days. After two days, moisture was removed, and haze values before and after dropping water were measured. The haze value of the coating film was measured in accordance with IS K7361 using HAZE METER, trade name, manufactured by Suga Test Instruments Co., Ltd. The case where the change in the haze values was less than 0.5 was evaluated as A, and the case where the change in the haze values was 0.5 or more was evaluated as B.

### (Preparation Example 1) Synthesis of LTI

122.2 g of ethanol amine, 100 ml of o-dichlorobenzene, and 420 ml of toluene were put into a four-necked flask equipped with a stirrer, a thermometer, and a gas inlet tube, and then hydrogen chloride gas was introduced therein under ice-cooling to convert the ethanol amine into a hydrochloride. Then, 182.5 g of lysine hydrochloride was added to the resultant, and then the reaction liquid was heated at 80°C to dissolve the ethanol amine hydrochloride therein, followed by introducing a hydrogen chloride gas thereinto to obtain lysine dihydrochloride. In addition, a hydrogen chloride gas was passed therethrough at a rate of 20 to 30 ml/minute, and the reaction liquid was heated at 116°C until water was not distilled off. The resultant reaction mixture was recrystallized in a mixture liquid composed of methanol and ethanol to obtain 165 g of a lysine β-aminoethyl ester trihydrochloride. 100 g of the lysine β-aminoethyl ester trihydrochloride was pulverized to fine powders, and then suspended in 1200 ml of o-dichlorobenzene, followed by heating the reaction liquid while conducting stirring. When the reaction temperature reached 120°C, phosgene was blown into the reaction liquid at a rate of 0.4 mol/hour over 10 hours, followed by heating the reaction liquid to 150°C. The suspension was almost dissolved. After the resultant was cooled and then subjected to filtration, the dissolved phosgene and solvent were distilled off under the reduced pressure, and then the resultant was subjected to vacuum distillation to obtain 80.4 g of a colorless and transparent LTI having a boiling point of 155 to 157°C / 0.022 mmHg. The NCO content thereof was 47.1% by mass.

### (Preparation Example 2) Synthesis of GTI

275 g of glutamic acid hydrochloride, 800 g of ethanolamine hydrochloride, and 150 ml of toluene were put into a four-necked flask equipped with a stirrer, a thermometer, and a gas inlet tube, and then the mixture was heated to reflux at 110°C for 24 hours while blowing a hydrogen chloride gas thereinto until azeotropy of water was not confirmed. The reaction mixture was recrystallized in a mixture liquid composed of methanol and ethanol to obtain 270 g of bis(2-aminoethyl)glutamate trihydrochloride. 85 g of the bis(2-aminoethyl)glutamate trihydrochloride was suspended in 680 g of o-dichlorobenzene, and then the temperature of the reaction liquid was raised while conducting stirring. When the temperature reached 135°C, a phosgene was blown thereinto at a rate of 0.8 mol/hour over 13 hours, followed by filtering the resultant, conducting vacuum concentration and then purification with a thin-film evaporator to obtain 54 g of GTI. The NCO content was 39.8% by mass.

### (Preparation Example 3) Synthesis of NTI

1060 g of 4-aminomethyl-1,8-octamethylene diamine (hereinafter, referred to as triamine) was dissolved in 1500 g of methanol in a four-necked flask equipped with a stirrer, a thermometer, and a gas inlet tube, and then 1800 ml of 35% concentrated hydrochloric acid was added dropwise into the resultant soluction gradually while conducting cooling. The resultant was concentrated by removing methanol and water therefrom under the reduced pressure, and then dried at 60°C and 5 mmHg for 24 hours to obtain a white solid triamine hydrochloride. 650 g of the resultant triamine hydrochloride was pulverized to fine powders, and then suspended in 5000 g of o-dichlorobenzene, followed by raising the temperature of the reaction liquid while conducting stirring. When the temperature reached 100°C, a phosgene was blown thereinto at a rate of 200 g/Hr, while continuing temperature rising till 180°C, followed by maintaining the temperature at 180°C while blowing the phosgene thereinto over 12 hours. The dissolved phosgene and solvent were distilled off under the reduced pressure, followed by conducting vacuum distillation to obtain 420 g of a colorless and transparent 4-isocyanate methyl-1,8-octanemethylene diisocyanate (hereinafter, referred to as "NTI") having a boiling point of 161 to 163°C / 1.2 mmHg. The NCO content thereof was 50.0% by mass.

### (Preparation Example 4) Synthesis of HDI polyisocyanate

50 g of HDI as a monomer and 0.05 g of isobutanol were charged into a four-necked flask equipped with a stirrer, a thermometer, and a gas inlet tube, and the temperature of the mixture was maintained at 80°C for 2 hours. Thereafter, 5 mg of benzyl trimethylammonium hydroxide, which was an isocyanurate-forming catalyst, was added to the mixture to allow the isocyanurate-forming reaction to proceed. When the yield reached 12%, dibutylphosphate was added to the resultant to terminate the reaction. The reaction liquid was further maintained at 120°C for 15 minutes to obtain a HDI polyisocyanate. The viscosity of the resultant HDI polyisocyanate was 2,300 mPa • s at 25°C, and the NCO content thereof was 4% by mass.

### (Preparation Example 5) Preparation of amine sulfonate 1

10 parts by mass of 1-propanol was added to 20 parts by mass of an aqueous solution containing 70% by mass of 2-hydroxyethanesulfonate, and then stirred to obtain a solution. A triethylamine was weighed such that an equivalent ratio became 1 and then diluted with the same mass of 1-propanol, followed by adding the resultant dilution dropwise into the stirring solution. The stirring was stopped 1 hour after the start of the dropwise addition, water and the solvent were removed from the resultant using an evaporator to obtain trimethylamine 2-hydroxyethanesulfonate (amine sulfonate 1) having a solid content of 99.0% by mass.

### (Preparation Example 6) Preparation of amine sulfonate 2

10 parts by mass of 1-propanol was added to 20 parts by mass of an aqueous solution containing 70% by mass of 2-hydroxyethanesulfonate, and then stirred to obtain a solution. In addition, a N,N-diisopropylethylamine was weighed such that an equivalent ratio became 1 and then diluted with the same mass of 1-propanol, followed by adding the resultant dilution dropwise into the stirring solution. The stirring was stopped 1 hour after the start of the dropwise addition, water and the solvent were removed from the resultant using an evaporator to obtain N,N-diisopropylethylamine 2-hydroxyethanesulfonate (amine sulfonate 2) having a solid content of 99.1% by mass.

### (Preparation Example 7) Preparation of amine sulfonate 3

10 parts by mass of 1-propanol was added to 20 parts by mass of an aqueous solution containing 70% by mass of 2-hydroxyethanesulfonate, and then stirred to obtain a solution. In addition, a tributylamine was weighed such that an equivalent ratio became 1 and then diluted with the same mass of 1-propanol, followed by adding the resultant dilution dropwise into the stirring solution. The stirring was stopped 1 hour after the start of the dropwise addition, water and the solvent were removed from the resultant using an evaporator to obtain tributylamine 2-hydroxyethanesulfonate (amine sulfonate 3) having a solid content of 99.1% by mass.

### (Preparation Example 8) Preparation of amine sulfonate 4

10 parts by mass of 1-propanol was added to 20 parts by mass of an aqueous solution containing 70% by mass of 2-hydroxyethanesulfonate, and then stirred to obtain a solution. In addition, a N,N-dimethylcyclohexylamine was weighed such that an equivalent ratio became 1 and then diluted with the same mass of 1-propanol, followed by adding the resultant dilution dropwise into the stirring solution. The stirring was stopped 1 hour after the start of the dropwise addition, water and the solvent were removed from the resultant using an evaporator to obtain N,N-dimethylcyclohexylamine 2-hydroxyethanesulfonate (amine sulfonate 4) having a solid content of 99.8% by mass.

### (Synthesis Example 1) Synthesis of P-1

50 g of NTI as a monomer and 4.6 g of 2-ethylhexanol were charged into a four-necked flask equipped with a stirrer, a thermometer, a reflux condenser, and a nitrogen inlet tube, under nitrogen atmosphere, and the temperature thereof was maintained at 90°C for 1 hour. Then, the temperature was raised to 130°C, 2 mg of a mineral spirits solution of zirconyl 2-ethylhexanoate, which is an allophanate-forming catalyst, having a solid content of 20% ("NIKKA OCTHIX ZIRCONIUM 13%", trade name, manufactured by NIHON KAGAKU SANGYO CO.,LTD., was diluted with mineral spirits) was added to the resultant to allow the allophanate-forming to proceed, followed by adding an isobutanol solution of pyrophosphoric acid having a solid content of 50% (a reagent manufactured by Katayama Chemical Industries Co., Ltd., was diluted with isobutanol) was added to the resultant to terminate the reaction, and thus a polyisocyanate P-1 was obtained. The viscosity of the obtained polyisocyanate P-1 was 27 mPa • s at 25°C.

### (Synthesis Example 2) Synthesis of P-2

50 g of hexamethylene diisocyanate and 4.0 g of 2-ethylhexanol were charged in a four-necked flask equipped with a stirrer, a thermometer, a reflux condenser, and a nitrogen inlet tube under nitrogen atmosphere, and the temperature thereof was maintained at 90°C for 1 hour. Then, the temperature was raised to 130°C, 2 mg of a mineral spirits solution of zirconyl 2-ethylhexanoate, which is an allophanate-forming catalyst, having a solid content of 20% ("NIKKA OCTHIX ZIRCONIUM 13%", trade name, manufactured by NIHON KAGAKU SANGYO CO.,LTD., was diluted with mineral spirits) was added to the resultant to allow the allophanate-forming to proceed, followed by adding an isobutanol solution of pyrophosphoric acid having a solid content of 50% (a reagent manufactured by Katayama Chemical Industries Co., Ltd., was diluted with isobutanol) was added to the resultant to terminate the reaction, and thus a polyisocyanate P-2 was obtained. The viscosity of the obtained polyisocyanate P-2 was 15 mPa • s at 25°C.

### (Synthesis Example 3) Synthesis of P-3

12.5 parts by mass of polyethylene glycol monomethyl ether (manufactured by NIPPON NYUKAZAI CO., LTD., under the trade name of "MPG-130"), in which the average number of ethylene glycol repeating units was 9.0, was added to 50 parts by mass of NTI in a four-necked flask equipped with a stirrer, a thermometer, a reflux condenser, and a nitrogen inlet tube, and then the mixture was stirred at 100°C for 4 hours under nitrogen atmosphere to allow the reaction to proceed. After the reaction ended, polyisocyanate P-3 was obtained. The viscosity of the obtained polyisocyanate P-3 was 15 mPa • s at 25°C, and the content of polyalkylene glycol alkyl ether was 19% by mass.

### (Synthesis Example 4) Synthesis of P-4

0.5 parts by mass of polyethylene glycol monomethyl ether (manufactured by NIPPON NYUKAZAI CO., LTD., under the trade name of "MPG-130"), in which the average number of ethylene glycol repeating units was 9.0, was added to 50 parts by mass of P-1 in a four-necked flask equipped with a stirrer, a thermometer, a reflux condenser, and a nitrogen inlet tube, and then the mixture was stirred at 100°C for 4 hours under nitrogen atmosphere to allow the reaction to proceed. After the reaction ended, polyisocyanate P-4 was obtained. The viscosity of the obtained polyisocyanate P-4 was 30 mPa • s at 25°C, and the content of polyalkylene glycol alkyl ether was 1% by mass.

### (Synthesis Example 5) Synthesis of P-5

1.0 part by mass of polyethylene glycol monomethyl ether (manufactured by NIPPON NYUKAZAI CO., LTD., under the trade name of "MPG-081"), in which the average number of ethylene glycol repeating units was 15.0, was added to 99.0 parts by mass of LTI in a four-necked flask equipped with a stirrer, a thermometer, a reflux condenser, and a nitrogen inlet tube, and then the mixture was stirred at 100°C for 4 hours under nitrogen atmosphere to allow the reaction to proceed. After the reaction ended, isocyanate composition P-5 was obtained. The viscosity of the obtained isocyanate composition P-5 was 28 mPa • s at 25°C, and the content of polyalkylene glycol alkyl ether was 1% by mass.

### (Example 1-1)

40.0 parts by mass of polyethylene glycol monomethyl ether (manufactured by NIPPON NYUKAZAI CO., LTD., under the trade name of "MPG"), in which the average number of ethylene glycol repeating units was 4.2, and 0.03 parts by mass of water were added to 60.0 parts by mass of LTI, and then the mixture was stirred at 100°C for 4 hours under nitrogen atmosphere to allow the reaction to proceed. After the reaction ended, an isocyanate composition was obtained.

The obtained isocyanate composition had a non-volatile content of 100% by mass, a viscosity of 40 mPa • s (25°C), and a NCO content of 28.3% by mass. The modification degree of the obtained composition was 22.2% by mol, and the average number of ethylene glycol repeating units detected by NMR was 4.1. Thus, the content of polyethylene glycol monomethyl ether was calculated to be 40%. Evaluation results are shown in Table 1.

### (Example 1-2)

25.7 parts by mass of polyethylene glycol monomethyl ether (manufactured by NIPPON NYUKAZAI CO., LTD., under the trade name of "MPG"), in which the average number of ethylene glycol repeating units was 4.2, 10.3 parts by mass of polyethylene glycol monomethyl ether (manufactured by NIPPON NYUKAZAI CO., LTD., under the trade name of "MPG-130", having a number average molecular weight of 130), in which the average number of ethylene glycol repeating units was 9.0, and 0.03 parts by mass of water were added to 64.0 parts by mass of LTI to adjust the average number of ethylene glycol repeating units to 5.0, and then the mixture was stirred at 100°C for 4 hours under nitrogen atmosphere to allow the reaction to proceed. After the reaction ended, an isocyanate composition was obtained. Evaluation results are shown in Table 1.

### (Example 1-3)

13.8 parts by mass of polyethylene glycol monomethyl ether (manufactured by NIPPON NYUKAZAI CO., LTD., under the trade name of "MPG"), in which the average number of ethylene glycol repeating units was 4.2, and 16.2 parts by mass of polyethylene glycol monomethyl ether (manufactured by NIPPON NYUKAZAI CO., LTD., under the trade name of "MPG-130"), in which the average number of ethylene glycol repeating units was 9.0, were added to 70.0 parts by mass of LTI to adjust the average number of ethylene glycol repeating units to 6.0, and then 0.03 parts by mass of water was added thereto, followed by stirring the mixture at 100°C for 4 hours under nitrogen atmosphere to allow the reaction to proceed. After the reaction ended, an isocyanate composition was obtained. Evaluation results are shown in Table 1.

### (Example 1-4)

20.0 parts by mass of polyethylene glycol monomethyl ether (manufactured by NIPPON NYUKAZAI CO., LTD., under the trade name of "MPG-130"), in which the average number of ethylene glycol repeating units was 9.0, and 0.03 parts by mass of water were added to 80.0 parts by mass of LTI, followed by stirring the mixture at 100°C for 4 hours under nitrogen atmosphere to allow the reaction to proceed. After the reaction ended, an isocyanate composition was obtained. Evaluation results are shown in Table 1.

### (Example 1-5)

20.0 parts by mass of polyethylene glycol monomethyl ether (manufactured by NOF CORPORATION, under the trade name of "M550", in which the average number of ethylene glycol repeating units was 11.8) having a number average molecular weight of 550, and 0.03 parts by mass of water were added to 80.0 parts by mass of LTI, followed by stirring the mixture at 100°C for 4 hours under nitrogen atmosphere to allow the reaction to proceed. After the reaction ended, an isocyanate composition was obtained. Evaluation results are shown in Table 2.

### (Example 1-6)

8.0 parts by mass of polyethylene glycol monomethyl ether (manufactured by NIPPON NYUKAZAI CO., LTD., under the trade name of "MPG-081", having a number average molecular weight of 81) in which the average number of ethylene glycol repeating units was 15.0, and 0.03 parts by mass of water were added to 92.0 parts by mass of LTI, followed by stirring the mixture at 100°C for 4 hours under nitrogen atmosphere to allow the reaction to proceed. After the reaction ended, an isocyanate composition was obtained. Evaluation results are shown in Table 2.

### (Example 1-7)

5.0 parts by mass of polyethylene glycol monomethyl ether (manufactured by The Dow Chemical Company under the trade name of "750", in which the average number of ethylene glycol repeating units was 16.3) having a number average molecular weight of 750, and 0.03 parts by mass of water were added to 95.0 parts by mass of LTI, followed by stirring the mixture at 100°C for 4 hours under nitrogen atmosphere to allow the reaction to proceed. After the reaction ended, an isocyanate composition was obtained. Evaluation results are shown in Table 2.

### (Example 1-8)

20.0 parts by mass of polyethylene glycol monomethyl ether (manufactured by NOF CORPORATION under the trade name of "M1000", in which the average number of ethylene glycol repeating units was 22.0) having a number average molecular weight of 1000, and 0.03 parts by mass of water were added to 80.0 parts by mass of LTI, followed by stirring the mixture at 100°C for 4 hours under nitrogen atmosphere to allow the reaction to proceed. After the reaction ended, an isocyanate composition was obtained. Evaluation results are shown in Table 2.

### (Example 1-9)

40.0 parts by mass of polyethylene glycol monomethyl ether (manufactured by NIPPON NYUKAZAI CO., LTD., under the trade name of "MPG-130"), in which the average number of ethylene glycol repeating units was 9.0, and 0.03 parts by mass of water were added to 60.0 parts by mass of LTI, followed by stirring the mixture at 100°C for 4 hours under nitrogen atmosphere to allow the reaction to proceed. After the reaction ended, an isocyanate composition was obtained. Evaluation results are shown in Table 2.

### (Example 1-10)

10 parts by mass of polyethylene glycol monomethyl ether (manufactured by NIPPON NYUKAZAI CO., LTD., under the trade name of "MPG-130"), in which the average number of ethylene glycol repeating units was 9.0, and 0.03 parts by mass of water were added to 90.0 parts by mass of LTI, followed by stirring the mixture at 100°C for 4 hours under nitrogen atmosphere to allow the reaction to proceed. After the reaction ended, an isocyanate composition was obtained. Evaluation results are shown in Table 3.

### (Example 1-11)

The isocyanate composition described in Example 1-4 and the HDI polyisocyanate described in Preparation Example 4 were mixed in the mass ratio of 90/10. Evaluation results are shown in Table 3.

### (Example 1-12)

20 g of monobutyl phosphate and 13.0 g of trimethylamine were mixed to neutralize a part of monobutyl phosphate. 33.0 parts by mass of the resultant mixture of monobutyl phosphate and trimethylamine and 0.3 parts by mass of water were added to 1000 parts by mass of LTI, followed by stirring the mixture at 90°C for 4 hours under nitrogen atmosphere to allow the reaction to proceed. After the reaction ended, an isocyanate composition was obtained. The following measurements were conducted by the same way as Example 1-1. The phosphorus atom content detected by ICP-AES was 0.38% by mass. Evaluation results are shown in Table 3.

### (Example 1-13)

10 g of monobutyl phosphate and 6.5 g of trimethylamine were mixed to neutralize a part of monobutyl phosphate. 100 parts by mass of polyethylene glycol monomethyl ether (manufactured by NOF CORPORATION under the trade name of "M400", in which the average number of ethylene glycol repeating units was 8.4), 16.5 parts by mass of the resultant mixture of monobutyl phosphate and trimethylamine, and 0.3 parts by mass of water were added to 1000 parts by mass of LTI, followed by stirring the mixture at 90°C for 4 hours under nitrogen atmosphere to allow the reaction to proceed. After the reaction ended, an isocyanate composition was obtained. The following measurements were conducted by the same way as Example 1-12. Evaluation results are shown in Table 4.

### (Example 1-14)

6.1 parts by mass of 3-cyclohexylaminopropanesulfonic acid, 3.5 parts by mass of N,N-dimethylcyclohexylamine, and 0.3 parts by mass of water were added to 1000 parts by mass of LTI, followed by stirring the mixture at 100°C for 5 hours under nitrogen atmosphere to allow the reaction to proceed. After the reaction ended, an isocyanate composition was obtained. The following measurements were conducted by the same way as Example 1-1. The sulfur atom content detected by ion chromatography was 0.09% by mass. Evaluation results are shown in Table 4.

### (Example 1-15)

12.5 parts by mass of triethylamine 2-hydroxyethanesulfonate (amine sulfonate 1) obtained in Preparation Example 5, 200 parts by mass of acetone, and 0.05 parts by mass of dibutyltin dilaurate were added to 1000 parts by mass of LTI, followed by stirring the mixture at 70°C for 5 hours while conducting reflux under nitrogen atmosphere to allow the reaction to proceed. Thereafter, a reflux apparatus was removed, 0.3 parts by mass of water was added to the resultant, and then stirred at 100°C for 0.5 hours to maintain the reaction. After the reaction ended, an isocyanate composition was obtained. The following measurements were conducted by the same way as Example 1-14. Evaluation results are shown in Table 4.

### (Example 1-16)

27.7 parts by mass of N,N-diisopropylethylamine 2-hydroxyethanesulfonate (amine sulfonate 2) obtained in Preparation Example 6, 200 parts by mass of acetone, and 0.05 parts by mass of dibutyltin dilaurate were added to 1000 parts by mass of LTI, followed by stirring the mixture at 70°C for 5 hours while conducting reflux under nitrogen atmosphere to allow the reaction to proceed. Thereafter, a reflux apparatus was removed, 0.3 parts by mass of water was added to the resultant, and then stirred at 100°C for 0.5 hours to maintain the reaction. After the reaction ended, an isocyanate composition was obtained. The following measurements were conducted by the same way as Example 1-14. Evaluation results are shown in Table 5.

### (Example 1-17)

85.5 parts by mass of tributylamine 2-hydroxyethanesulfonate (amine sulfonate 3) obtained in Preparation Example 7, and 0.3 parts by mass of water were added to 1000 parts by mass of LTI, followed by stirring the mixture at 100°C for 6 hours under nitrogen atmosphere to allow the reaction to proceed. After the reaction ended, an isocyanate composition was obtained. The following measurements were conducted by the same way as Example 1-14. Evaluation results are shown in Table 5.

### (Example 1-18)

7.0 parts by mass of N,N-dimethylcyclohexylamine 2-hydroxyethanesulfonate (amine sulfonate 4) obtained in Preparation Example 8, 20.0 parts by mass of polyethylene glycol monomethyl ether (manufactured by NIPPON NYUKAZAI CO., LTD., under the trade name of "MPG-130") in which the average number of ethylene glycol repeating units was 9.0, and 0.3 parts by mass of water were added to 1000 parts by mass of LTI, followed by stirring the mixture at 100°C for 4 hours under nitrogen atmosphere to allow the reaction to proceed. After the reaction ended, an isocyanate composition was obtained. The following measurements were conducted by the same way as Example 1-14. Evaluation results are shown in Table 5.

### (Example 1-19)

The reaction was conducted by the same way as Example 1-4, except that GTI was used instead of LTI, to obtain an isocyanate composition. Evaluation results are shown in Table 5.

### (Example 1-20)

The reaction was conducted by the same way as Example 1-4, except that the addition amount of water was 0.01 parts by mass, to obtain an isocyanate composition. Evaluation results are shown in Table 6.

### (Example 1-21)

The reaction was conducted by the same way as Example 1-4, except that the addition amount of water was 0.1 parts by mass, to obtain an isocyanate composition. Evaluation results are shown in Table 6.

### (Example 1-22)

The reaction was conducted by the same way as Example 1-4, except that MPG-130 containing 1000 ppm of water was used as a raw material, to obtain an isocyanate composition. Evaluation results are shown in Table 6.

### (Comparative Example 1-1)

The reaction was conducted by the same way as Example 1-4, except that a HDI polyisocyanate prepared in Preparation Example 4 was used instead of LTI, to obtain an isocyanate composition. Evaluation results are shown in Table 6.

### (Example 1-23)

75.5 parts by mass of dipropylene glycol dimethyl ether (resin solid content: 70% by mass) was added to the isocyanate composition prepared in Example 1-4, and then the mixture was heated at 70°C. Thereafter, 84.4 parts by mass of 3,5-dimethylpyrazole (1.03 molar times relative to NCO) was added thereto while conducting stirring, and then the mixture was stirred at 70°C for 1 hour, to obtain a blocked isocyanate composition. Evaluation results of the resultant blocked isocyanate composition are shown in Table 7.

### (Example 1-24)

A blocked isocyanate composition was obtained by the same way as that of Example 1-23, except that the isocyanate composition prepared in Example 1-18 was used as an isocyanate composition. Evaluation results are shown in Table 7.

### (Comparative Example 1-3)

A blocked isocyanate composition was obtained by the same way as that of Example 1-23, except that the isocyanate composition prepared in Comparative Example 1-1 was used as an isocyanate composition. Evaluation results are shown in Table 7.

**Table 1**

| | Example1-1 | Example! -2 | Example1-3 | Example1-4 |
|---|---|---|---|---|
| Starting isocyanate | LTI | LTI | LTI | LTI |
| Hydrophilic compound | MPG | MPG | MPG | MPG-130 |
| | | MPG-130 | MPG-130 | |
| Amount of water [ppm/total resin] | 300 | 300 | 300 | 300 |
| NCO content [wt%] | 28.3 | 34.9 | 33.0 | 37.7 |
| Average number of repeating unit y of alkylene glycol | 4 | 5 | 6 | 9 |
| Content of polyalkylene glycol alkyl ether [% by mass] | 40 | 36 | 30 | 20 |
| Modification degree of polyalkylene glycol alkyl ether [% by mol] | 22.2 | 16.6 | 11.4 | 5.0 |
| Phosphorus atom content [% by mass] | - | - | - | - |
| Sulfur atom content [% by mass] | - | - | - | - |
| Molar ratio of urea group (urea group / (NCO group + urea group)) [% by mol] | 0.46 | 0.43 | 0.45 | 0.44 |
| Viscosity [mPa•s/25°C] | 40 | 34 | 33 | 30 |
| Number of NCO group | 2.3 | 2.5 | 2.7 | 2.9 |
| Decreasing degree of viscosity | A | A | A | A |
| Water dispersibility | A | A | A | A |
| Drying property | B | B | A | A |
| Water-resistance | B | B | A | A |
| Wet-adhesion resistance | B | B | A | A |
| Dispersibility in primary component | B | B | A | A |

**Table 2**

| | Example 1-5 | Example 1-6 | Example 1-7 | Example 1-8 | Example 9 |
|---|---|---|---|---|---|
| Starting isocyanate | LTI | LTI | LTI | LTI | LTI |
| Hydrophilic compound | M550 | MPG-081 | 750 | M1000 | MPG-130 |
| Amount of water [ppm/total resin] | 300 | 300 | 300 | 300 | 300 |
| NCO content [wt%] | 37.7 | 43.3 | 44.7 | 258 | 28.3 |
| Average number of repeating unit y of alkylene glycol | 118 | 15 | 16.3 | 22 | 9 |
| Content of polyalkylene glycol alkyl ether [% by mass] | 20 | 8 | 5 | 30 | 40 |
| Modification degree of polyalkylene glycol alkyl ether [% by mol] | 3.9 | 1.1 | 0.6 | 3.8 | 12.2 |
| Phosphorus atom content [% by mass] | - | - | - | - | - |
| Sulfur atom content [% by mass] | - | - | - | - | - |
| Molar ratio of urea group (urea group / (NCO group + urea group)) [% by mol] | 0.33 | 0.44 | 0.39 | 0.52 | 0.41 |
| Viscosity [mPa•s/25°C] | 29 | 27 | 26 | 50 | 52 |
| Number of NCO group | 29 | 2.8 | 2.9 | 2.9 | 2.6 |
| Decreasing degree of viscosity | A | A | A | A | A |
| Water dispersibility | A | B | B | B | A |
| Drying property | A | A | A | A | B |
| Water-resistance | A | A | A | A | B |
| Wet-adhesion resistance | A | A | A | B | B |
| Dispersibility in primary component | A | A | A | B | B |

**Table 3**

| | Example 1-10 | Example 1-11 | Example 1-12 |
|---|---|---|---|
| Starting isocyanate | LTI | Example 1-4 /HDI polyisocyanate =90/10 (mass ratio) | LTI |
| Hydrophilic com | pound MPG-130 | | Triethylamine monobutyl phoshate |
| Amount of water [ppm/total resin] | 300 | | 290 |
| NCO content [wt%] | 42.4 | | 42.4 |
| Average number of repeating unit y of alkylene glycol | 9 | | - |
| Content of polyalkylene glycol alkyl ether [% by mass] | 10 | | - |
| Modification degree of polyalkylene glycol alkyl ether [% by mol] | 2.3 | | - |
| Phosphorus atom content [% by mass] | - | | 0.38 |
| Sulfur atom content [% by mass] | - | | - |
| Molar ratio of urea group (urea group / (NCO group + urea group)) [% by mol] | 0.37 | 0.35 | 0.32 |
| Viscosity [mPa•s/25°C] | 29 | 160 | 30 |
| Number of NCO group | 2.9 | 3.0 | 2.9 |
| Decreasing degree of viscosity | A | A | A |
| Water dispersibility | A | A | A |
| Drying property | A | A | A |
| Water-resistance | A | A | A |
| Wet-adhesion resistance | A | A | A |
| Dispersibility in primary component | A | A | A |

**Table 4**

| | Example 1-13 | Example 1-14 | Example |
|---|---|---|---|
| Starting isocyanate | LTI | LTI | LTI |
| Hydrophilic compound | Triethylamine monobutyl phosphate | 3-cyclohexyl aminopropane sulfonic acid | Amine sulfonate 1 |
| Amount of water [ppm/total resin] | 270 | 300 | 300 |
| NCO content [wt%] | 45.2 | 43.3 | 40.0 |
| Average number of repeating unit y of alkylene glycol | - | - | - |
| Content of polyalkylene glycol alkyl ether [% by mass] | - | - | - |
| polyalkylene glycol alkyl ether [% by mol] | - | - | - |
| Phosphorus atom content [% by mass] | 0.18 | - | - |
| Sulfur atom content [% by mass] | - | 0.09 | 0.17 |
| Molar ratio of urea group (urea group / (NCO group + urea group)) [% by mol] | 0.34 | 0.31 | 0.32 |
| Viscosity [mPa•s/25°C] | 28 | 31 | 33 |
| Number of NCO group | 2.9 | 2.9 | 2.9 |
| Decreasing degree of viscosity | A | A | A |
| Water dispersibility | A | A | A |
| Drying property | A | A | A |
| Water-resistance | A | A | A |
| Wet-adhesion resistance | A | A | A |
| component | A | A | A |

**Table 5**

| | Example 1-16 | Example 1-17 | Example 1-18 | Example 1-19 |
|---|---|---|---|---|
| Starting isocyanate | LTI | LTI | LTI | GTI |
| Hydrophilic compound | Amine sulfonate 2 | sulfonate 3 | Amine sulfonate 4 MPG-130 | MPG-130 |
| Amount of water [ppm/total resin] | 290 | 280 | 290 | 300 |
| NCO content [wt%] | 46.2 | 46.0 | 46.8 | 37.7 |
| Average number of repeating unit y of alkylene glycol | - | - | - | 9 |
| Content of polyalkylene glycol alkyl ether [% by mass] | - | - | - | 5.8 |
| Modification degree of polyalkylene glycol alkyl ether [% by mol] | - | - | - | 20 |
| Phosphorus atom content [% by mass] | - | - | - | - |
| Sulfur atom content [% by mass] | 0.34 | 0.80 | 0.09 | - |
| Molar ratio of urea group (urea group / (NCO group + urea group)) [% by mol] | 0.35 | 0.29 | 0.30 | 0.36 |
| Viscosity [mPa•s/25°C] | 27 | 33 | 31 | 30 |
| Number of NCO group | 3.0 | 2.9 | 3.0 | 2.9 |
| Decreasing degree of viscosity | A | A | A | A |
| Water dispersibility | A | A | B | A |
| Drying property | A | A | A | A |
| Water-resistance | A | A | A | A |
| Wet-adhesion resistance | A | A | A | A |
| Dispersibility in primary component | A | A | A | A |

**Table 6**

| | Example | Example 1-21 | Example 2 | Comparative Example1-1 |
|---|---|---|---|---|
| Starting isocyanate | LTI | LTI | LTI | HDI polyisocyanate |
| Hydrophilic compound | MPG-130 | MPG-130 | MPG-130 | MPG-130 |
| Amount of water [ppm/total resin] | 100 | 1000 | 150 | 300 |
| NCO content [wt%] | 37.7 | 37.7 | 37.7 | 16.4 |
| Average number of repeating unit γ of alkylene glycol | 9 | 9 | 9 | 9 |
| Content of polyalkylene glycol alkyl ether [% by mass] | 20 | 20 | 20 | 102 |
| Modification degree of polyalkylene glycol alkyl ether [% by mol] | 5.0 | 5.0 | 5.0 | 20 |
| Phosphorus atom content [% by mass] | - | - | - | - |
| Sulfur atom content [% by mass] | - | - | - | - |
| Molar ratio of urea group (urea group / (NCO group + urea group)) [% by mol] | 0.07 | 1.47 | 0.17 | 0.29 |
| Viscosity [mPa•s/25°C] | 30 | 30 | 30 | 2500 |
| Number of NCO group | 2.9 | 2.9 | 2.9 | 2.9 |
| Decreasing degree of viscosity | A | A | A | C |
| Water dispersibility | A | B | A | C |
| Drying property | A | A | A | A |
| Water-resistance | A | B | A | A |
| Wet-adhesion resistance | A | B | A | C |
| Dispersibitity in primary component | A | B | A | C |

**Table 7**

| | Example 1-23 | Example 1-24 | Comparative Example 1-3 |
|---|---|---|---|
| Starting isocyanate | LTI | GTI | HDI nurate |
| Hydrophilic compound | MPG-130 | MPG-130 | MPG-130 |
| Average number of repeating unit y of alkylene glycol | 9 | 9 | 9 |
| Modification degree of polyalkylene glycol alkyl ether [% by mol] | 5.0 | 5.8 | 10.2 |
| Content of polyalkylene glycol alkyl ether [% by mass] | 20 | 20 | 20 |
| Blocking agent | DMP | DMP | DMP |
| Viscosity [mPa•s/25°C] | 240 | 720 | 3400 |
| Effective NCO content [wt%] | 11.9 | 11.7 | 9.3 |
| Number of NCO group | 2.9 | 2.9 | 2.9 |
| Decreasing degree of viscosity | A | A | C |
| Water dispersibility | A | A | C |
| Drying property | B | B | B |
| Water-resistance | A | B | A |

### (Example 1-25)

An isocyanate composition was obtained by the same procedure as that of Example 1-1 except that 0.03 g of 2,2,4-trimethylpentane and 1.0 g of water were added to 300 g of LTI.

Each evaluation results of the isocyanate composition were the same as those of Example 1-1.

### (Example 1-26)

An isocyanate composition was obtained by the same procedure as that of Example 1-1 except that 0.03 g of hexadecane and 1.0 g of water were added to 300 g of LTI.

Each evaluation results of the isocyanate composition were the same as those of Example 1-1.

### (Preparation Example 9)

20 g of LTI was charged in a four-necked flask equipped with a stirrer, a thermometer, a reflux condenser, and a nitrogen inlet tube under nitrogen atmosphere, heated at 60°C, and 7.2 g of methanol was added thereto, followed by stirring the mixture for 4 hours to obtain a N-substituted carbamic ester C-1.

### (Example 1-27)

An isocyanate composition was obtained by the same way as that of Example 1-1, except that 0.03 g of N-substituted carbamic ester C-1 and 1.0 g of water were added to 300 g of LTI.

Each evaluation results of the isocyanate composition were the same as those of Example 1-1.

As shown by the results, the isocyanate compositions of examples according to the present invention realized low viscosity, water dispersibility, drying property, water-resistance, wet-adhesion resistance, and dispersibility into the primary component.

### INDUSTRIAL APPLICABILITY

The isocyanate composition according to the present invention has a low viscosity, and is favorably used as a coating composition excellent in water dispersibility, drying property and water-resistance.

## Claims

1. An isocyanate composition comprising an isocyanate compound of general formula (I)-1, (I)-2 or (I)-3: 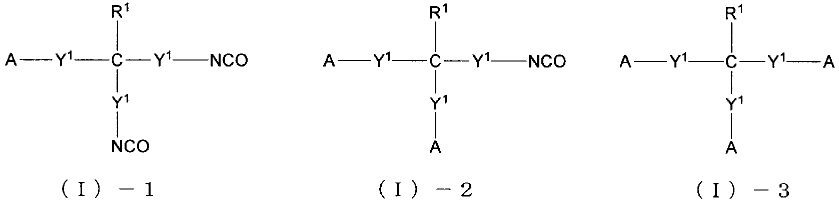
in the general formulae, A represents a residual group comprising a reactant structure of an active hydrogen-containing hydrophilic compound and an isocyanate group, a plurality of Y¹ each independently represents a single bond or a divalent C1-20 hydrocarbon group which may have at least one selected from the group consisting of an ester structure and an ether structure, the plurality of Y¹ may be identical to or different from each other, and R¹ represents a hydrogen atom or a monovalent C1-12 hydrocarbon group,
wherein the active hydrogen-containing hydrophilic compound is at least one selected from the group consisting of anionic compounds, cationic compounds, and nonionic compounds, and
A has an urea group, and a mole fraction of the urea group, relative to a total mol of an isocyanate group and the urea group, in the general formula (I)-1, (I)-2 or (1)-3, is 0.01% by mol to 10% by mol.

2. The isocyanate composition according to claim 1, wherein at least one of the plurality of Y¹ comprises an ester structure.

3. The isocyanate composition according to claim 1 or 2, further comprising a phosphoric acid compound.

4. The isocyanate composition according to claim 1 or 3, wherein the active hydrogen-containing hydrophilic compound is at least one anionic compound selected from the group consisting of carboxylic acid group-containing compounds, phosphoric acid group-containing compounds, and sulfonic acid group-containing compounds.

5. The isocyanate composition according to claim 4, wherein the anionic compound comprises the sulfonic acid group-containing compound, and
the sulfonic acid group-containing compound is at least one selected from the group consisting of hydroxyl group-containing sulfonic acids and amino group-containing sulfonic acids.

6. The isocyanate composition according to claim 1 or 3, wherein the active hydrogen-containing hydrophilic compound is the cationic compound, and the cationic compound comprises an amino group-containing compound, and is neutralized with an anionic group-containing compound.

7. The isocyanate composition according to claim 1 or 3, wherein the active hydrogen-containing hydrophilic compound is the nonionic compound, and the nonionic compound is a polyalkylene glycol ether comprising general formula (III): 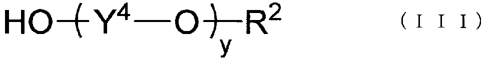 in the general formula (III), Y⁴ represents an ethylene group, R² represents a C1-8 alkyl group, and an average number of repeating unit y of ethylene glycol is 3.0 to 20.

8. The isocyanate composition according to any one of claims 1 to 7, wherein the isocyanate compound is the isocyanate compound of general formula (I)-1 or (I)-2, and at least a part of the isocyanate group in the isocyanate compound is protected by a blocking agent.

9. A coating composition comprising an isocyanate composition of any one of claims 1 to 8.

10. The coating composition according to claim 9, further comprising water.

11. A coating film formed by curing a coating composition of claim 9 or 10.

## Patentansprüche

1. Isocyanatzusammensetzung, umfassend eine Isocyanatverbindung der allgemeinen Formel (I)-1, (I)-2 oder (I)-3: 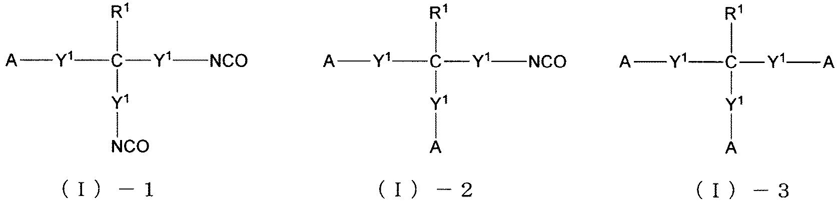 wobei in den allgemeinen Formeln A eine Restgruppe darstellt, umfassend eine Reaktantenstruktur aus einer aktiven Wasserstoff enthaltenden hydrophilen Verbindung und einer Isocyanatgruppe, die mehreren Y¹ jeweils unabhängig voneinander eine Einfachbindung oder eine zweibindige C1-20-Kohlenwasserstoffgruppe darstellen, die mindestens eines aufweisen kann, ausgewählt aus der Gruppe bestehend aus einer Esterstruktur und einer Etherstruktur, wobei die mehreren Y¹ identisch oder voneinander verschieden sein können, und R¹ ein Wasserstoffatom oder eine einbindige C1-12-Kohlenwasserstoffgruppe darstellt,
wobei die aktiven Wasserstoff enthaltende hydrophile Verbindung mindestens eine ist, ausgewählt aus der Gruppe bestehend aus anionischen Verbindungen, kationischen Verbindungen und nichtionischen Verbindungen, und
A eine Harnstoffgruppe aufweist und der Molanteil der Harnstoffgruppe, bezogen auf die Gesamtmol von Isocyanatgruppe und der Harnstoffgruppe, in der allgemeinen Formel (I)-1, (I)-2 oder (I)-3 0,01 Mol-% bis 10 Mol-% beträgt.

2. Isocyanatzusammensetzung nach Anspruch 1, wobei mindestens eines der mehreren Y¹ eine Esterstruktur umfasst.

3. Isocyanatzusammensetzung nach Anspruch 1 oder 2, die weiterhin eine Phosphorsäureverbindung enthält.

4. Isocyanatzusammensetzung nach Anspruch 1 oder 3, wobei die aktiven Wasserstoff enthaltende hydrophile Verbindung mindestens eine anionische Verbindung ist, ausgewählt aus der Gruppe bestehend aus Carbonsäuregruppe-enthaltenden Verbindungen, Phosphorsäuregruppeenthaltenden Verbindungen und Sulfonsäuregruppe-enthaltenden Verbindungen.

5. Isocyanatzusammensetzung nach Anspruch 4, wobei die anionische Verbindung die Sulfonsäuregruppe-enthaltende Verbindung umfasst, und
die Sulfonsäuregruppe-enthaltende Verbindung mindestens eine ist, ausgewählt aus der Gruppe bestehend aus Hydroxylgruppen-enthaltenden Sulfonsäuren und Aminogruppe-enthaltenden Sulfonsäuren.

6. Isocyanatzusammensetzung nach Anspruch 1 oder 3, wobei die aktiven Wasserstoff enthaltende hydrophile Verbindung die kationische Verbindung ist und die kationische Verbindung eine Aminogruppe-enthaltende Verbindung umfasst und mit einer anionische Gruppe-enthaltenden Verbindung neutralisiert ist.

7. Isocyanatzusammensetzung nach Anspruch 1 oder 3, wobei die aktiven Wasserstoff enthaltende hydrophile Verbindung die nichtionische Verbindung ist und die nichtionische Verbindung ein Polyalkylenglycolether der allgemeinen Formel (III) ist: 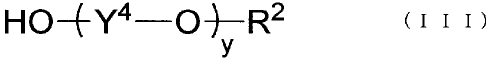 wobei in der allgemeinen Formel (III) Y⁴ eine Ethylengruppe darstellt, R² eine C1-8-Alkylgruppe darstellt und die mittlere Anzahl der sich wiederholenden Einheit y des Ethylenglycols 3,0 bis 20 beträgt.

8. Isocyanatzusammensetzung nach einem der Ansprüche 1 bis 7, wobei die Isocyanatverbindung die Isocyanatverbindung der allgemeinen Formel (I)-1 oder (I)-2 ist und mindestens ein Teil der Isocyanatgruppe in der Isocyanatverbindung durch ein Blockierungsmittel geschützt ist.

9. Beschichtungszusammensetzung, umfassend eine Isocyanatzusammensetzung nach einem der Ansprüche 1 bis 8.

10. Beschichtungszusammensetzung nach Anspruch 9, welche weiterhin Wasser enthält.

11. Beschichtungsfilm/-folie, gebildet durch Härten einer Beschichtungszusammensetzung nach Anspruch 9 oder 10.

## Revendications

1. Composition d'isocyanate comprenant un composé isocyanate de formule générale (I)-1, (I)-2 ou (I)-3 : 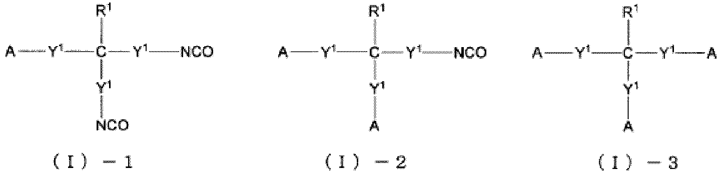
dans les formules générales, A représente un groupe résiduel comprenant une structure réactive d'un composé hydrophile contenant de l'hydrogène actif et d'un groupe isocyanate, une pluralité de Y¹ représentent chacun indépendamment une liaison simple ou un groupe hydrocarboné divalent en C1-20 qui peut comporter au moins un choisi dans le groupe constitué d'une structure ester et d'une structure éther, la pluralité de Y¹ peuvent être identiques les uns aux autres ou différents les uns des autres, et R¹ représente un atome d'hydrogène ou un groupe hydrocarboné monovalent en C1-12,
dans laquelle le composé hydrophile contenant de l'hydrogène actif est au moins un choisi dans le groupe constitué de composés anioniques, de composés cationiques et de composés non ioniques, et
A comporte un groupe urée, et une fraction molaire du groupe urée, par rapport à un nombre total de moles d'un groupe isocyanate et du groupe urée, dans la formule générale (I)-1, (I)-2 ou (I)-3, est de 0,01 % en moles à 10 % en moles.

2. Composition d'isocyanate selon la revendication 1, dans laquelle au moins l'un de la pluralité de Y¹ comprend une structure ester.

3. Composition d'isocyanate selon les revendications 1 ou 2, comprenant en outre un composé acide phosphorique.

4. Composition d'isocyanate selon la revendication 1 ou 3, dans laquelle le composé hydrophile contenant de l'hydrogène actif est au moins un composé anionique choisi dans le groupe constitué de composés contenant des groupes acide carboxylique, de composés contenant des groupes acide phosphorique et de composés contenant des groupes acide sulfonique.

5. Composition d'isocyanate selon la revendication 4, dans laquelle le composé anionique comprend le composé contenant des groupes acide sulfonique, et
le composé contenant des groupes acide sulfonique est au moins un choisi dans le groupe constitué d'acides sulfoniques contenant des groupes hydroxyles et d'acides sulfoniques contenant des groupes amino.

6. Composition d'isocyanate selon la revendication 1 ou 3, dans laquelle le composé hydrophile contenant de l'hydrogène actif est le composé cationique, et le composé cationique comprend un composé contenant des groupes amino, et est neutralisé par un composé contenant des groupes anioniques.

7. Composition d'isocyanate selon la revendication 1 ou 3, dans laquelle le composé hydrophile contenant de l'hydrogène actif est le composé non ionique, et le composé non ionique est un éther de polyalkylène glycol comprenant la formule générale (III) : 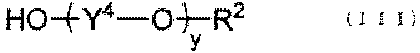 dans la formule générale (III), Y⁴ représente un groupe éthylène, R² représente un groupe alkyle en C1-8, et un nombre moyen de motif répétitif y d'éthylène glycol est de 3,0 à 20.

8. Composition d'isocyanate selon l'une quelconque des revendications 1 à 7, dans laquelle le composé isocyanate est le composé isocyanate de formule générale (I)-1 ou (I)-2, et au moins une partie du groupe isocyanate dans le composé isocyanate est protégée par un agent bloquant.

9. Composition de revêtement comprenant une composition d'isocyanate selon l'une quelconque des revendications 1 à 8.

10. Composition de revêtement selon la revendication 9, comprenant en outre de l'eau.

11. Film de revêtement formé par durcissement d'une composition de revêtement selon la revendication 9 ou 10.
